(19) **Europäisches Patentamt**
**European Patent Office**
**Office européen des brevets**

(11) **EP 4 193 032 B1**

(12) # EUROPEAN PATENT SPECIFICATION

(45) Date of publication and mention
of the grant of the patent:
**20.08.2025 Bulletin 2025/34**

(21) Application number: **21754841.1**

(22) Date of filing: **22.07.2021**

(51) International Patent Classification (IPC):
*E21B 7/02* (2006.01)   *E21B 44/00* (2006.01)
*E02D 11/00* (2006.01)   *E02D 7/00* (2006.01)
*E02F 9/02* (2006.01)   *E02F 9/26* (2006.01)
*G01M 1/14* (2006.01)   *G01M 1/12* (2006.01)
*E02D 5/56* (2006.01)   *E02D 7/22* (2006.01)
*E02D 13/06* (2006.01)   *E02F 3/06* (2006.01)
*E02F 5/20* (2006.01)   *G01M 17/03* (2006.01)

(52) Cooperative Patent Classification (CPC):
**E21B 7/02; E02D 7/22; E02D 13/06; E02F 3/06;
E02F 5/20; E02F 9/264; E21B 44/00; G01M 17/03;**
E02D 5/56

(86) International application number:
**PCT/IB2021/056638**

(87) International publication number:
**WO 2022/029537 (10.02.2022 Gazette 2022/06)**

---

(54) **MACHINE FOR PERFORMING EXCAVATIONS, IN PARTICULAR FOR DRILLING, AND METHOD ASSOCIATED TO SUCH MACHINE**

MASCHINE ZUR DURCHFÜHRUNG VON AUSGRABUNGEN, INSBESONDERE ZUM BOHREN, UND VERFAHREN IM ZUSAMMENHANG MIT SOLCH EINER MASCHINE

MACHINE POUR RÉALISER DES EXCAVATIONS, EN PARTICULIER POUR LE FORAGE, ET PROCÉDÉ ASSOCIÉ À UNE TELLE MACHINE

---

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.08.2020 IT 202000019597**

(43) Date of publication of application:
**14.06.2023 Bulletin 2023/24**

(73) Proprietor: **Soilmec SpA
47522 Cesena (FC) (IT)**

(72) Inventors:
• **RAFFUZZI, Mirco Armando
48015 Cervia (RA) (IT)**

• **MANTOVANI, Francesco
47522 Cesena (FC) (IT)**

(74) Representative: **Vitillo, Giuseppe
Barzanò & Zanardo S.p.A.
Corso Vittorio Emanuele II, 61
10128 Torino (IT)**

(56) References cited:
EP-A1- 2 578 757     WO-A1-2014/166331
WO-A1-2018/045542    CN-A- 103 912 218
JP-A- 2013 108 245    JP-A- H09 105 155
JP-A- S61 287 696     JP-B2- 5 248 361
US-A1- 2006 289 205

---

## Description

### Technical field

The present invention relates to a machine for making excavations, in particular for drilling, and to a method associated with such machine.

### Technical background

Machines for making excavations are known which include drilling machines equipped with a tracked undercarriage. In particular, within the field of machines for foundation excavations, three main families of drilling machines exist: a first family includes drilling machines for small-diameter piles, also referred to as micropiles, which are typically small machines not equipped with an on-board operator station, used in different soil reinforcement techniques, or in probing or geothermal applications; a second family includes drilling machines for large-diameter piles, usually employed for drilling circular holes with diameters in excess of 600 mm, such drilling machines being much bigger than the previously mentioned ones and being equipped with an on-board operator station; a third family includes diaphragm wall excavation machines, which perform rectangular cross-section excavations mostly for retention or waterproofing works, the geometry of such machines being similar to that of construction cranes, and which are also equipped with an on-board operation station. All three of the above-mentioned main families of drilling machines have a common feature consisting of including an undercarriage with two tracked sides or, using more common terminology, two tracks for moving the machine on the ground.

The base machine develops on top of the tracked sides, and contains power units, such as an endothermal engine and hydraulic pumps, transmission means, such as winches, in addition to housing control equipment and systems and the operator's control station. Pile or micropile drilling machines are provided with a mast, which is a member generally having a rectangular cross-section that extends vertically even for a few tens of meters and is connected to the front end of the base machine through a hinge or a suitable kinematic mechanism consisting of one or more arms and hydraulic cylinders, which allow it to be tilted or positioned in space relative to the base machine.

Along said mast a rotary drilling head slides, also referred to as rotary, which is connected to the drill string fitted with a tool.

While they have a base machine which is very similar, or even identical, to that of pile drilling machines, in diaphragm wall excavation machines the mast is replaced with a lattice or boxed arm that supports, by means of ropes, the excavation tool, generally consisting of a bucket or a cutter.

A problem which is common to all of the different machine types is the inherent risk of overturning which arises from the particular disposition of the masses, due to the considerable vertical extension of the mast or lattice arm and of the loads suspended therefrom, as well as to the action of external forces generated in different operating conditions, e.g. the force generated by the wind, which is normally detrimental to stability. This translates into the need for the operator to monitor the degree of stability of the machine in order to be able to safely perform the excavation operations. In fact, insufficient stability may expose the operator to the risk of the machine turning over, resulting in serious consequences for the people involved in the event.

According to reference standards, the stability calculation is based on the sum of all moments, i.e. overturning moments and stabilizing moments, that act simultaneously upon the machine. The parameter taken into consideration to evaluate stability is the "stability angle", also referred to as "residual stability angle", which represents the residual angle at which the machine, subject to a system of loads, including dynamic loads, can be inclined relative to one of the overturning lines before turning over.

Such residual stability angle must be calculated in the different conditions in which the machine is expected to be, e.g. also during transport, assembly, manoeuvring, parking and operation.

A first method known in the art for facing the risk of overturning relies on safety rules specifically applying to this sector, according to which, during the design phase, and therefore prior to use, the coordinates of the barycentre of the machine must be computed with respect to a reference origin and, starting from such coordinates, the residual stability angle must be evaluated with respect to the closest overturning line, taking into account the masses involved, external loads, wind force, inertia forces, centrifugal force, dynamic effects, ground slope. For the machine to be considered to be stable, said residual stability angle must be always greater than a value indicated in such specifications, which will depend on the state of the machine (working, moving, idle).

Given that the overturning lines, defined in the technical standards as those lines which join the contact points of the lowest supports of the track rollers in the direction of travel, or those lines that cross the centres of the contact areas of the supports in the direction perpendicular to the direction of travel, are known at the design stage, in order to compute the residual stability angle it is necessary to know the position of the barycentre of the machine, inclusive of all installed excavation equipment and tools.

The values required for computing the position of the barycentre of the machine are based on measured or assumed values of the masses of the main fixed and movable components of the drilling equipment and tools to be used, an approximate assessment of the action of the wind, estimated calculations of the inertia forces, assumptions concerning the loads and, lastly, the very geometry of the machine. When defining such values, considerable approximations are generally resorted to because the operator cannot evaluate exact instantaneous safety margins, since he is only aware of limits defined *a priori* during the design phase, such as, for example, a maximum working radius or a maximum mast tilting angle. Such limits defined beforehand, being subject to inaccuracy due to lack of real-time measurements in the actual operating context of the machine, are provided on a precautionary basis, in order to keep the machine and the operator in acceptable safe conditions. This first method has, therefore, an impact that may have adverse effects on the working conditions of the machine due to the precautionary restrictions imposed thereon. For example, the maximum working distances of the mast and of the kinematic mechanism are in this case calculated *a priori* and limited by safety devices, assuming that the movable masses of the machine, e.g. parts movable by actuators, are in the most unfavourable positions for stability. However, when the masses are in less unfavourable positions, such limits set *a priori* may adversely affect the performance of the machine.

Other known systems try to overcome the above-described drawbacks by resorting to control systems and software installed aboard the machine, which, based on information received from suitable sensors located on the movable members of the machine, utilize an electronic computer to compute the barycentre position and possibly setting limits for the operation of the machine. For example, sensors may be installed which detect, either directly or indirectly, the instantaneous position of the kinematic mechanism of the machine, the position of the mast and/or of the rotary and of the tool-equipped drill string. Through additional sensors, it is then possible to know the angular position of the upper structure with respect to the undercarriage and to a reference axis.

Usually such systems utilize, especially as concerns the values of the masses of the machine components, a dataset pre-loaded into a database included in the management software. Such data are required by the software of the control system to compute the barycentre of the machine, after having identified the spatial positions of said components by means of dedicated sensors.

When working on construction sites, it may often occur that the machine operator needs to change the configuration of the equipment of the drilling machine, by replacing or adding components, in order to switch from an operating configuration dedicated to a certain excavation technology to another, or that he simply needs to change the tool. For example, modular elements may be added to the mast to increase its length, or additional components may be installed, such as an excavation tool cleaner or a second rotary for driving a casing, or a drill bit having a certain diameter may be replaced with a bigger, and hence heavier, one. In these cases, the control systems of such known machines require the user to intervene manually via an interface, e.g. a display, to correctly set in the software the new values of the masses of the components that have been changed in the machine equipment, so that the software will consider said new values in the stability calculation. This need for manual intervention by the operator, or by authorized personnel, e.g. the yard foreman, is generally due to the fact that, until now, it has been particularly difficult to identify sensor types which can be installed either on the machine or directly on each interchangeable component of the machine and which can detect the above-mentioned possible equipment modifications, e.g. the replacement of a component with another interchangeable component. This need for manual intervention by the operator makes such systems poorly reliable, since they are subject to human error or improper use. As a matter of fact, the user may enter into the software wrong mass values and wrong installed component types, whether unintentionally due to inattention or intentionally in order to "deceive" the control system and obtain better performance. It is clear that such occurrences will lead to errors in the calculation of the residual stability angle, thus jeopardizing the safety of the operators and of the machine.

JP 5 248361 B2 discloses to provide a device and a method for measuring the stability of a pile driver capable of obtaining the stability using the pile driver in an actual working state. A first load applied to each jack when the pile driver is floated at a first tilt angle by operating a front jack and a rear jack and a second load applied to each jack when the pile driver is floated at a second tilt angle by operating the front jack and the rear jack are obtained by the device and the method. The position of the center of gravity of the pile driver is calculated based on a first tilt angle and a second tilt angle and a first load and a second load, and the stability of the pile driver is calculated from the calculated positions of centers of the gravities, and dimensions of a carrier.

JP 2013 108245 A discloses to provide a pile driver and a centroid position measuring method for the pile driver with which a centroid position of the pile driver can be measured by integrating a sensor which detects a load in the pile driver per se. As a leader bracket connection member for connecting an upper rotating body and a leader bracket, four first pin-shaped load cells are used for detecting loads, including a leader and an auger driving device, applied to the leader bracket. The first pin-shaped load cells are disposed above and under right and left side parts of the leader bracket, respectively. Mount holes for mounting the upper first pin-shaped load cells are formed circular correspondingly to a diameter of the first pin-shaped load cells, and lower mount holes are formed in an elliptic shape which is elongated in a perpendicular direction with respect to the diameter of the first pin-shaped load cells.

## Summary of the invention

It is an object of the present invention to provide a machine and a method for making excavations, in particular for drilling, more in particular for making foundations, such machine and method being of an improved type and capable of overcoming the above-summarized drawbacks of the prior art.

According to the present invention, this and other objects are achieved through a machine and a method having the technical features set out in the appended independent claims.

It is understood that the appended claims are an integral part of the technical teachings provided in the following detailed description of the present invention. In particular, the appended dependent claims define some preferred embodiments of the present invention that include some optional technical features.

One advantage that can be attained through one embodiment of the present invention that will be described below lies in the use of a set of sensors configured for measuring all those instantaneous physical actions exerted on the machine which may have an impact on its stability. As will be detailed hereinafter, the system can compute the position of the barycentre of the machine without necessarily having to know the positions and the masses of its various elements, in that it exploits the principle of the dynamic effect that external forces, whatever they may be, generate upon known points of the undercarriage of the machine.

Further features and advantages of the present invention will become apparent in light of the following detailed description, provided merely as a non-limiting example and referring, in particular, to the annexed drawings as summarized below.

## Brief description of the drawings

Figure 1 shows a perspective view of a machine for making excavations, in particular for drilling, and more in particular for making foundations, such machine being made in accordance with an exemplary embodiment of the present invention. Such machine is, by way of non-limiting example, suitable for making large-diameter piles, although the teachings of the present invention are also applicable to other machine types, such as excavation machines, diaphragm wall excavation machines, or machines for making micropiles, or other types of construction machinery.

Figure 2A shows a partially exploded perspective view of an undercarriage belonging to the machine shown in Figure 1.

Figure 2B shows a detailed perspective view of a first embodiment of the connection between the tracks and the frame of the undercarriage shown in Figure 2A.

Figure 2C shows a plan view of the undercarriage shown in the preceding figures, sectioned along a longitudinal horizontal plane.

Figure 3 is a perspective view of an excavation machine made in accordance with a further exemplary embodiment of the present invention, showing a group of sensors applied to such machine. Such machine is particularly suitable for drilling, e.g. for making large-diameter piles.

Figure 4 is a magnified partial perspective view of a detail of the sensors applied to a frame of the excavation machine.

Figure 5 is a side elevation view of the machine shown in Figures 3 and 4. This figure shows one possible example of geometric references and variables taken into account in the stability calculation, according to an advantageous embodiment of the present invention.

Figure 6 is a magnified partial perspective view showing a detail of the top portion of a mast of the machine of Figures 3 to 5, whereon an anemometer and a vane have been applied, according to an advantageous embodiment of the present invention.

Figure 7 is a side elevation view of the machine shown in Figures 3 to 6. This figure shows one possible example of the variables used for measuring some dynamic effects affecting stability, according to an advantageous embodiment of the present invention.

Figure 8A is a partially sectional side elevation view that shows one possible variant implementation of an undercarriage applicable to one of the machines illustrated in the preceding figures.

Figure 8B is a sectional view of the undercarriage 8A in the plane Y-Z and passing through one of the transverse assemblies of said undercarriage.

Figures 9 to 13 show different block diagrams that illustrate different methods of computing the planar and elevation coordinates of the barycentre and other parameters of the machines shown in the preceding figures.

## Detailed description of the invention

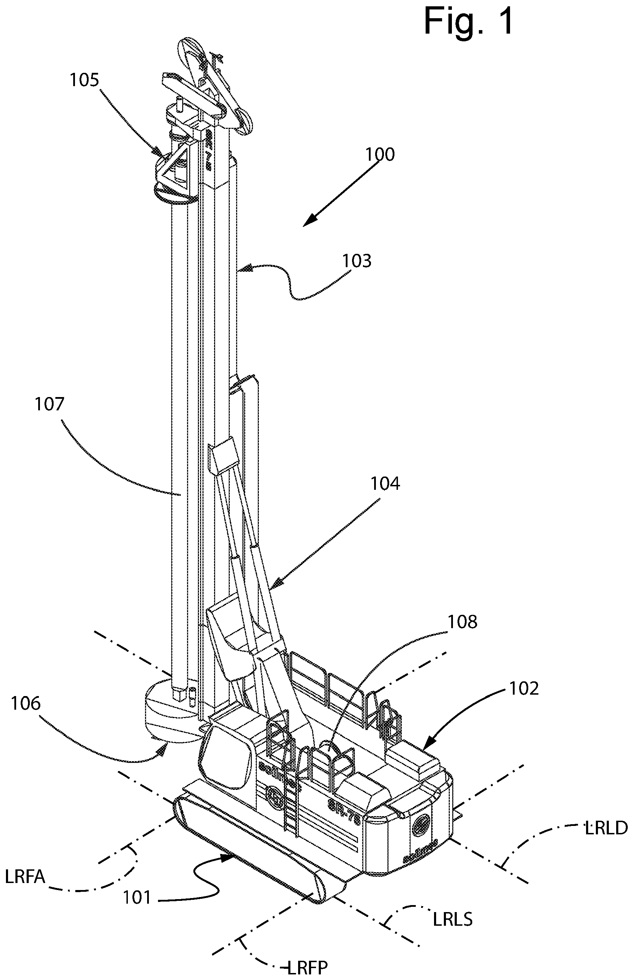

With particular reference to Figure 1, there is shown an excavation machine **100** made in accordance with an exemplary embodiment of the present invention. In particular, machine **100** is a drilling machine, but in other alternative embodiments it may be a different type of machine, e.g. any construction machine fitted with a tracked undercarriage, such as an excavator or the like.

Machine **100** comprises a tracked undercarriage **101** and a base machine **102,** e.g. an upper structure equipped with a control cabin, solidly connected to undercarriage **101.** By way of non-limiting example, the connection between base machine **102** and undercarriage **101** is established through the interposition of a slewing ring (not shown), so that base machine **102** can rotate about the vertical axis of undercarriage **101.** In further variant implementations (not shown), the base machine may be integral with the undercarriage.

Machine **100** further comprises excavation equipment adapted to take different working positions or configurations. In particular, the excavation equipment comprises a mast **103,** situated in front of base machine **102,** and an associated kinematic mechanism **104.** Mast **103** is connected to base machine **102** through kinematic mechanism **104,** which allows mast **103** to take different operating positions in space relative to base machine **102.** In a simplified variant implementation, such kinematic mechanism **104** may even be a simple hinged connection between mast **103** and base machine **102** to permit tilting the mast.

Furthermore, the excavation equipment of machine **100** comprises a rotary driving head referred to as rotary **105,** which can slide relative to mast **103,** in particular axially along the longitudinal direction of the latter. In particular, the excavation equipment of machine **100** comprises also an excavation tool **106**; with reference to Figure 1, excavation tool **106** is connected to the bottom end of a string of telescopic pipes, or "kelly bars", **107** connected to rotary **105.** In a *per se* known manner, rotary **105** is configured for imparting a rotational motion to string of pipes **107** and to excavation tool **106.** At the same time, rotary **105** is configured for translating the string of pipes **107** and tool **106.** In particular, during the drilling process rotary **105** is configured for translating tool **106** downwards and applying a thrust force to tool **106.** Rotary **105** is also configured for translating th tool **106** upwards by applying a pulling force.

Machine **100** further comprises a winch **108,** which may be installed either in base machine **102** or in mast **103,** and which, through a rope running on a pulley installed on the top part of the mast, is connected to the string of telescopic pipes **107.** By winding and unwinding said rope, winch **108** can, respectively, cause the string of telescopic pipes **107** and tool **106** to go up or down; in particular, when extracting the tool from the excavation, it can apply a stronger pulling force to the tool in order to overcome the weights and friction involved.

Such thrust and pulling forces are taken into account in the stability calculations used in the prior art, since they can generate overturning moments on the machine.

Figure 1 also shows the possible overturning lines of the machine; in particular, **LRFA** indicates the front overturning line, **LRFP** indicates the rear overturning line, **LRLS** indicates the left lateral overturning line, and **LRLD** indicates the right lateral overturning line.

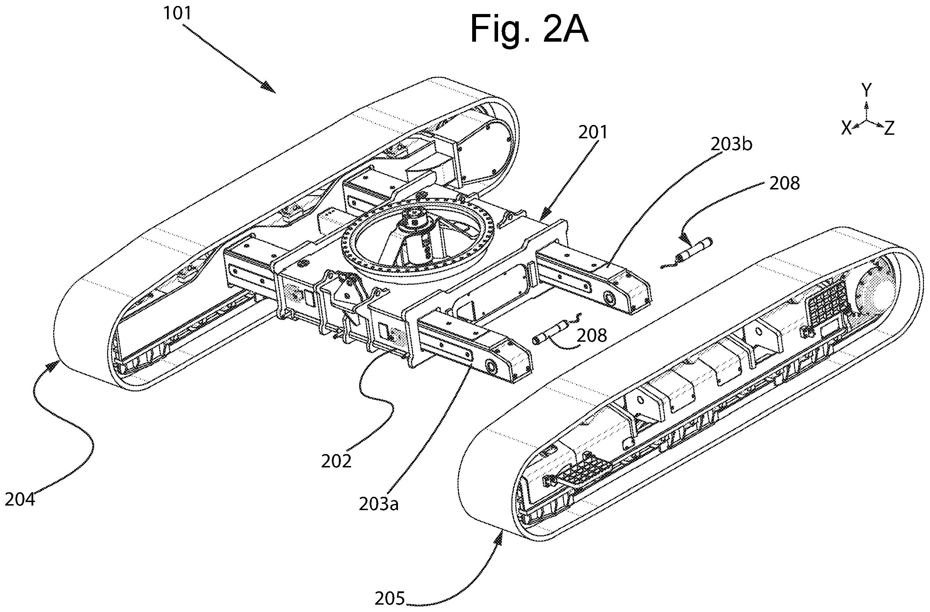

With particular reference to Figure 2A, it shows in more detail the components of undercarriage **101.** Such undercarriage **101** comprises a frame **201** that, in the illustrated embodiment, includes in its turn a central body **202.** In proximity to its centre, central body **202** is-advantageously, but not necessarily - machined in a *per se* known manner to house a slewing ring (not shown), which acts as a connection with base machine **102.**

In particular, frame **201** further comprises a front transverse assembly or front crossmember **203a** and a rear transverse assembly or rear crossmember **203b.** Transverse assemblies **203a** and **203b** are connected, e.g. either integrally or with the possibility of sliding sideways, to central body **202.** The connection between transverse assemblies **203a** and **203b** and central body **202** may thus be either fixed (e.g. accomplished by welding) or it may be effected through a "prismatic" coupling allowing relative sliding movements. In particular, transverse assemblies **203a, 203b** are rotatably integral with central body **202,** preventing any rotation/inclination of the crossmembers with respect to the central body.

Each transverse assembly or crossmember protrudes with a first end from a side of central body **202** and protrudes with a second end from the opposite side of central body 202.

In the illustrated embodiment, each transverse assembly **203a** and **203b** consists of a single element; however, in further variants (not shown) each one of the transverse assemblies may comprise a respective pair of separate beam-like members arranged coaxial, and preferably connected telescopically, to each other. Such telescopic connection permits a mutual axial sliding movement of the two elements of one transverse assembly **203a** and **203b,** and permits changing the distance of each end of one transverse assembly from the sides of central body 202.

Moreover, undercarriage **101** comprises a right track **204** and a left track **205.** Each one of tracks **204, 205** is connected, at the front and at the rear, to the respective ends of transverse assemblies **203a, 203b** protruding on the same side from central body **202.** In particular, each one of transverse assemblies **203a** and **203b** has at its ends suitable fixing means for connecting to right track **204** on one side and to left track **205** on the other side.

In Figure 2A a reference system is also defined, which has its origin in a "reference plane" x-z, which is a horizontal plane that may coincide with, for example, the plane in which the undercarriage tracks lie on the ground, and which has axis **X** oriented along the direction of travel of the undercarriage and positioned equidistant from both tracks. Axis **Z** belongs to the reference plane and is oriented perpendicular to the direction of travel, and axis **Y** is perpendicular to the plane in which the undercarriage lies and is oriented upwards.

As will be apparent to a person skilled in the art, the adjectives front and rear, as well as right and left, should be considered to refer to a direction of travel of machine **100**.

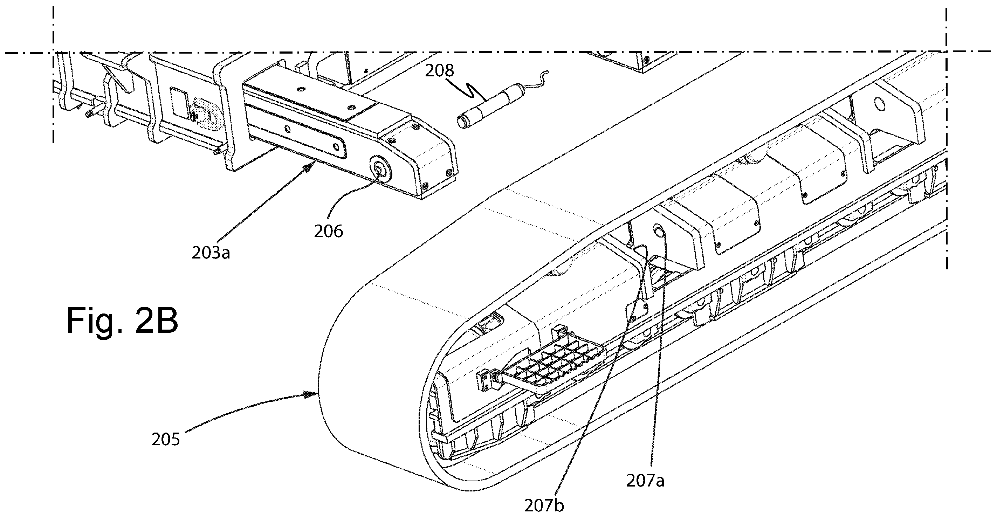

With particular reference to Figure 2B, there is shown one of the connections between one end of transverse assembly **203a** and the respective track **205,** which is obtained, according to the embodiment of the present invention illustrated herein, through one or more fixing means. As to the corresponding connections between the ends of the other transverse assemblies and the respective tracks, which are not visible in Figure 2B but are made in a similar manner in the illustrated embodiment, reference should be made to the following description of the connection shown in Figure 2B. In particular, the above-mentioned fixing means comprises at least one first hole **206** formed at the end of transverse assembly **203a,** at least one second hole **207a** formed at the point of connection of track **205,** and a pin-shaped load cell **208** inserted through said first hole **206** and said second hole, thus acting as a connection member between transverse assembly **203a** and track **205.** Preferably, the point of connection of the track consists of a cavity (or seat) formed in the side of the track, such cavity having a shape suitable for receiving and housing one end of transverse assembly **203a** with some play.

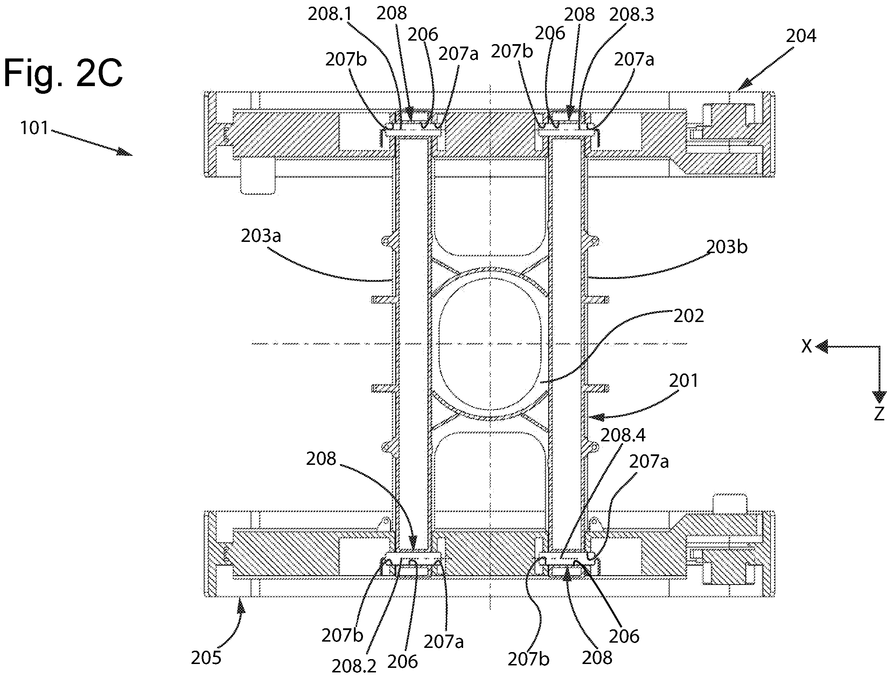

As better visible in Figure 2C of the exemplary embodiment illustrated herein, the point of connection of the track comprises, in addition to the second hole **207a,** also a further second hole **207b,** so that there are a pair of second holes **207a, 207b;** however, it must be pointed out that, as will be apparent to a person skilled in the art, it is also conceivable to use, differently from this embodiment, just one second hole.

In particular, load cell **208** - which is advantageously shaped as a pin - is inserted coaxial to the holes **206, 207a** and **207b,** thus acting as a connection member, as mentioned above.

As illustrated in Figures 2A, 2B, 2C, the connection established by inserting a single pin-shaped cell **208** is substantially a hinge, which permits relative rotation between respective track **204, 205** and the end of the respective transverse assembly **203a, 203b** about the longitudinal axis of cell **208.** Such rotation is however limited to a few degrees by the prismatic coupling established between the end of the respective transverse assembly **203a, 203b** and the cavity representing the point of connection of the respective track **204, 205.** Therefore, the play, i.e. the interspace between the end of the respective transverse assembly **203a, 203b** and said cavity, determines the angle of relative rotation allowed between such transverse assembly **203a, 203b** and the respective track **204, 205.**

In the embodiment shown by way of example in Figure 2C there is a single through hole **206** formed at the end of a transverse assembly **203a** or **203b** and a pair of coaxial holes **207a** and **207b** formed on the respective track **204** or **205.**

According to the embodiment of the present invention illustrated in Figure 2C, each one of the points of connection between frame **201** and the respective track **204** and **205** belonging to undercarriage **101** includes a respective load cell **208** of the above-described type. In particular, each one of the two tracks **204** and **205** of the undercarriage is connected to frame **201** at two connection points, and in particular each track **204, 205** is connected to two transverse assemblies **203a, 203b,** so that four load cells **208** are installed in the undercarriage.

More in detail, according to the embodiment particularly visible in Figure 2C, the four load cells **208** include:

- a front load cell **208.1** mounted at the point of connection between a lateral track **204** and front transverse assembly **203a,**
- another front load cell **208.2** mounted at the point of connection between the other lateral track **205** and front transverse assembly **203a,**
- a rear load cell **208.3** mounted at the point of connection between a lateral track **204** and rear transverse assembly **203b,** and
- another rear load cell **208.4** mounted at the point of connection between the other lateral track **205** and rear transverse assembly **203b.**

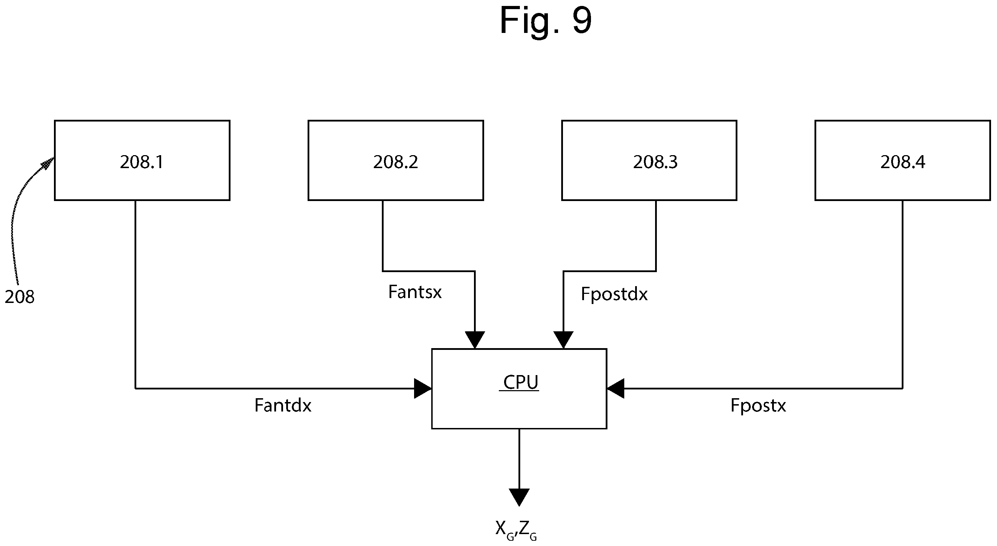

With particular reference to Figure 9, the signals collected from load cells **208** situated at the above-mentioned connection points correspond to force data $F_{antdx}$, $F_{antsx}$, $F_{postdx}$, $F_{postsx}$ which are substantially representative of the forces acting upon load cells **208** themselves, at the points where they have been applied. Such force data $F_{antdx}$, $F_{antsx}$, $F_{postdx}$, $F_{postsx}$ are also indicative of the reaction force exerted between the associated lateral track **204, 205** and the respective transverse assembly **203a, 203b** at the connection point. In particular, force data $F_{antdx}$ and $F_{antsx}$ are representative of the forces detected by right front load cell **208.1** and, respectively, by left front load cell **208.2;** whereas $F_{postax}$ and $F_{postsx}$ are representative of the forces detected by right rear load cell **208.3** and, respectively, left rear load cell **208.4.**

As a function of the above-mentioned signals, corresponding to the directly measured reaction force data $F_{antdx}$, $F_{antsx}$, $F_{postax}$ and $F_{postsx}$, it is possible to compute-instead of just assuming, as in the prior art -planar position $X_G$, $Z_G$ of the barycentre of machine **100** situated substantially at the level of a reference plane **X-Z,** as already described. It follows that, as can be understood by those skilled in the art, this system makes it possible to determine, with better precision compared with the current state of the art, the planar position of barycentre $X_G$, $Z_G$, even instant by instant, and hence the instantaneous residual stability angle. This advantageously allows the operator, when informed by a signalling system, to intervene in time in case of danger and/or to allow the machine to stay in and/or return to safe conditions, more effectively than prior-art machines, through the implementation of an optional control system.

As described above, the present invention permits identifying planar position $X_G$, $Z_G$ of the barycentre of the machine also by means of measurements of physical quantities actually acting upon the machine, and this is where it differs from the prior art, according to which the position of the barycentre is calculated exclusively starting from assumptions made *a priori* regarding the masses, forces and instantaneous positions of the elements and components that constitute the base machine.

According to the embodiment of the present invention illustrated herein, machine **100** is equipped with a system comprising a plurality of sensors, in particular a plurality of load cells **208** mounted on undercarriage **101.** Load cells **208** permit, by measuring the reaction force between each one of tracks **204** and **205** and the respective transverse assembly **203a, 203b,** an exact identification of the planar position of barycentre $X_G$, $Z_G$, computed in a reference plane, e.g. in the plane whereon machine **100** lies or in a horizontal plane. The computation of said planar position of barycentre $X_G$, $Z_G$ is carried out by a control system **CPU** as a function of force data $F_{antox}$, $F_{antsx}$, $F_{postax}$, $F_{postsx}$.

Merely by way of example, if the forces measured at the same instant by the right front load cell **208.1** and by the left front load cell **208.2** are identical in the absence of any external loads acting upon the machine, this means that coordinate $Z_G$ of the barycentre in the reference plane is equidistant from both ends of the front transverse assembly **203a** and equidistant from both tracks **204, 206,** so that $Z_G$ will have a value equal to zero and will be located on axis **X** according to the previously described reference system **X-Y-Z.** In accordance with a wholly similar principle, by combining the force values measured by all load cells it will be possible to determine the position of the barycentre in plane **X-Z** by computing the pair of values $X_G$, $Z_G$.

Furthermore, according to a preferred aspect of the present invention, it is also possible to compute the vertical position or coordinate of barycentre $Y_G$ above the reference plane, e.g. the plane whereon the machine lies, along a vertical axis, hereafter referred to as axis **Y.**

In order to compute the vertical position or coordinate along axis **Y,** different principles may be followed.

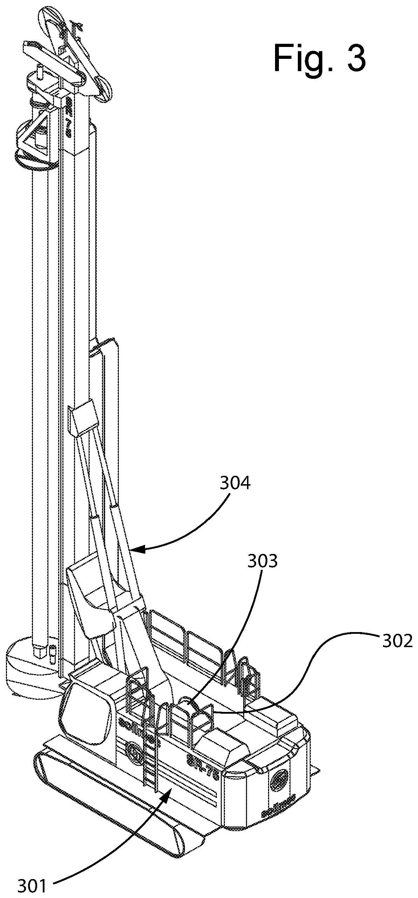

For example, one principle - *per se* known - that can be followed is the one represented herein by way of example with reference to Figure 3. According to such principle, sensors are mounted on the actuators configured for moving the parts and components of machine **100,** in particular of base machine **102.** By way of non-limiting example, such actuators may include jacks, gear motors connected to the slewing ring for rotating base machine **102,** and winches. Additional suitable sensors are also included, which provide information about the instantaneous position and spatial configuration of the excavation equipment of machine **100.** More in detail, the sensors associated with such actuators may be, for example, an angular position sensor **301** associated with the slewing ring (e.g. an encoder mounted on such slewing ring), one or more additional angular position sensors (in this embodiment there are, in fact, a first angular position sensor and an additional second angular position sensor **302, 303)** associated with winch **108** (or even with a plurality of respective winches), and one or more linear position sensors **304** associated with the jacks that control other parts and components of the excavation equipment of base machine **102.** In this manner, it will be possible to estimate the height of the barycentre by applying a *per se* known computation principle, which in this case will be combined with the innovative and more accurate principle of computation of the planar position of barycentre $X_G$, $Z_G$ at the level of reference plane **X-Z,** e.g. the ground plane whereon the machine lies, measured in real time by means of the above-described load cells **208.**

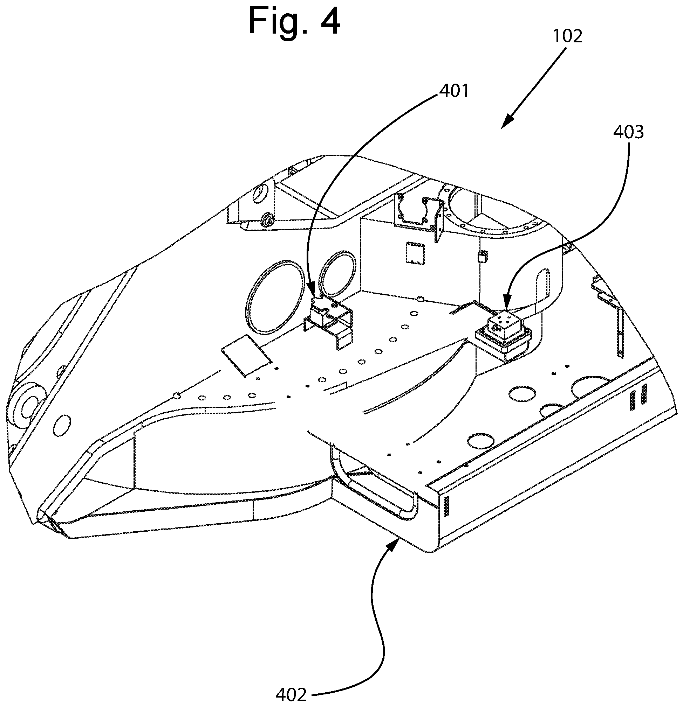

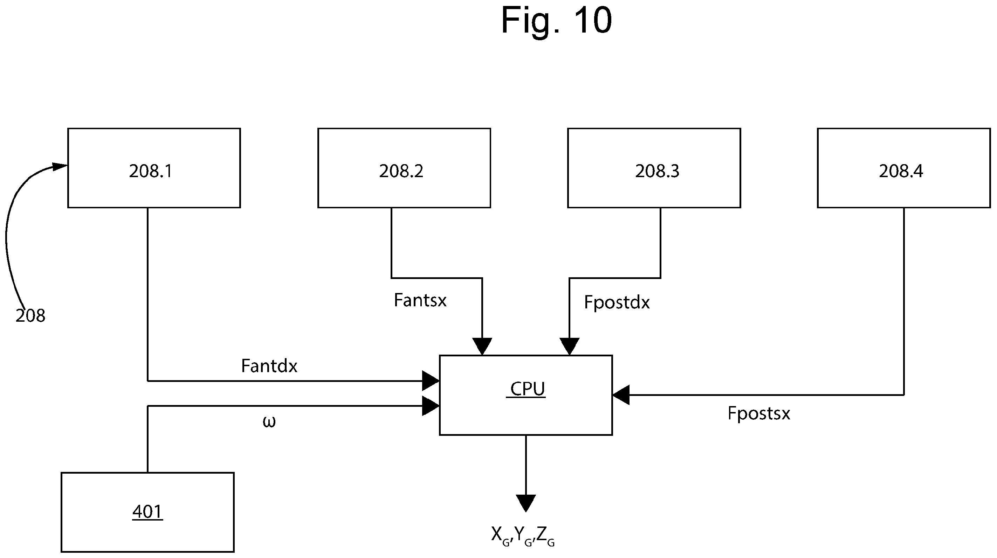

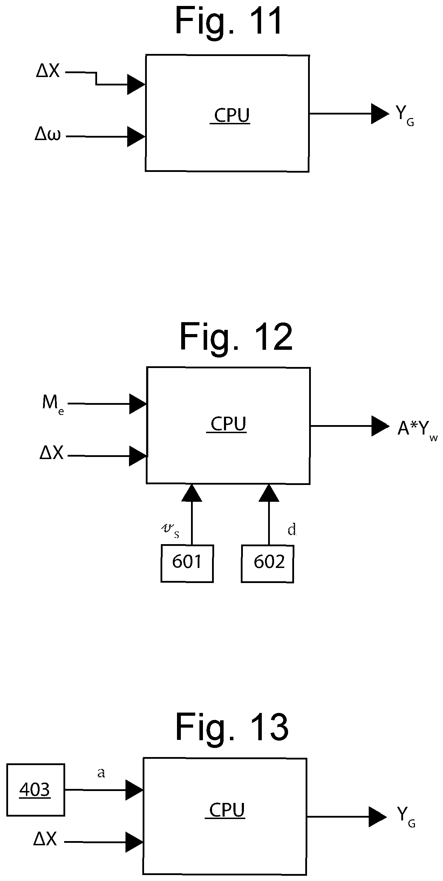

As an alternative to the principle described above with reference to Figure 3, a further alternative example of a principle for the computation of the barycentre vertical position $Y_G$ along axis **Y,** combined with the computation of barycentre planar position $X_G$, $Z_G$ at the level of the reference plane **X-Z,** will now be described with reference to Figure 4. The above-mentioned alternative principle is shown in the block diagram represented in Figure 10. According to such principle, an inclinometer **401** is mounted on a supporting structure **402** belonging to base machine **102** and is configured for detecting angle data ω indicative of at least one angle of inclination between a reference axis of the base machine **102** and the direction of the force of gravity. Barycentre vertical position $Y_G$ is computed by control system **CPU** as a function of force data $F_{antdx}$, $F_{antsx}$, $F_{postdx}$, $F_{postsx}$ and angle data ω. In the illustrated embodiment, the reference axis is the axis of the slewing ring. Barycentre planar position $X_G$, $Z_G$ at the level of the reference plane **X-Z** according to the principle shown in Figure 11 is computed by the control system **CPU** as a function of force data $F_{antdx}$, $F_{antdx}$, $F_{postdx}$, $F_{postsx}$, in accordance with the principle shown in Figure 10.

Inclinometer **401** may be of the single-axis type (thus detecting only one angle of inclination, measured in a predefined plane), but a two-axis inclinometer is preferably resorted to, so that a pair of angles of inclination can be detected which are indicative of the angular variation of the reference axis (e.g. the axis of the slewing ring) in different planes, in particular perpendicular to each other. In this latter case, the actual spatial position of the barycentre will be measured with better precision.

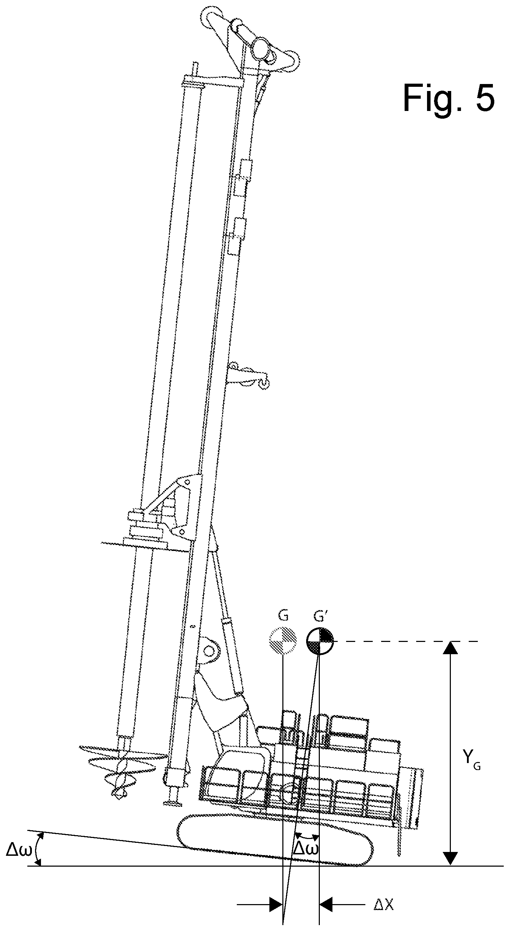

With reference to Figure 5, there is shown in more detail one possible example of geometric references and variables taken into account for computing the barycentre and stability of machine **100,** according to an advantageous embodiment of the present invention. In fact, machine **100** illustrated therein is essentially a tracked drilling machine made in accordance with the preceding figures and equipped with a slewing ring configured for allowing the rotation of base machine (or upper structure) **102.** The adopted reference system uses, as its origin **"O"**, the intersection between the level of the reference plane - e.g. considered to lie on the ground - and the axis of the slewing ring when it is perpendicular to the reference plane, while axis **"Y"** is positive upwards, axis **"X"** is positive forwards, and resulting axis **"Z"** is coherent with a right-handed triplet.

According to the block diagram of Figure 11, barycentre vertical position $Y_G$ is computed by control system **CPU** as a function of:

- position variation $\Delta X$ of barycentre planar position $X_G$, $Z_G$ in the reference plane, and
- angle variation $\Delta\omega$ of angle data $\omega$ detected by inclinometer **401.** Position variation $\Delta X$ and angle variation $\Delta\omega$ are computed between the same two consecutive instants, in particular between initial position **G** and final position **G'**.

More in detail, in the illustrated embodiment, to an angle variation $\Delta\omega$ of the reference axis in a plane **XY,** computed on a axis **X** and accurately measured by inclinometer **401,** a barycentre position variation corresponds which has a value $\Delta X$, accurately assessed by means of load cells **208.** In fact, on axis **"X",** abscissa coordinate $X_G$ of the barycentre position on axis **"X"** is given by the following formula:

$$X_G = \frac{X_{gsott} m_{sott} g + F_{antdx} X_{antdx} + F_{antsx} X_{antsx} + F_{postdx} X_{postdx} + F_{postsx} X_{postsx}}{F_{adx} + F_{asx} + F_{pdx} + F_{psx} + m_{sott} g}$$

where:

- forces **"F"** are those read by load cells **208** (in particular, as previously described, $F_{antdx}$ and $F_{antsx}$ are the forces detected by the right front load cell **208.1** and by the left front load cell **208.2**, while $F_{postdx}$ and $F_{postsx}$ are the forces detected by the right rear load cell **208.3** and by the left rear load cell **208.4**);
- mass **"$m_{sott}$"** is the mass of that part of the undercarriage **101** which is below the load cells (between the load cells and the ground);
- coordinates **"X"** correspond to the abscissa coordinates of the above-mentioned forces and mass (in particular, $X_{antdx}$ and $X_{antsx}$ are the abscissa coordinates of the position of the right front load cell **208.1** and left front load cell **208.2**, while $X_{postdx}$ and $X_{postsx}$ are the abscissa coordinates of the right rear load cell **208.3** and left rear load cell **208.1**, $X_{gsott}$ is the abscissa coordinate of the mass $m_{sott}$);
- acceleration **"g"** is the gravitational acceleration. Of course, right and left positions **"X"** will likely be equal due to a preferably symmetrical construction.

In order to obtain height coordinate $Y_G$, the following formula is used:

$$Y_G = \frac{\Delta X}{\tan(\Delta\omega)}$$

Therefore, according to such principle, the barycentre position can be computed by associating the readings of load cells **208,** i.e. $F_{antdx}$, $F_{antsx}$, $F_{postdx}$ and $F_{postsx}$, with that of inclinometer **401,** i.e. $\Delta\omega$.

Of course, in the case wherein inclinometer **401** is, advantageously, of the two-axis type, it is also possible to compute angle variation $\Delta\omega$ as a function of the inclination of the slewing ring axis in plane **YZ,** in accordance with the principle illustrated above for plane **XY,** making the computation of the barycentre position globally more accurate through a comparison of the data obtained with reference to plane **XY.**

According to a variant embodiment of the present invention, the calculation of barycentre height $Y_G$ can be made by using both of the above-described principles at the same time. The comparison between the results obtained by the first principle (i.e. the one illustrated with reference to Figure 3) and, respectively, the second principle (i.e. the one illustrated with reference to Figure 4, wherein the readings of load cells **208,** i.e. $F_{antdx}$, $F_{antsx}$, $F_{postdx}$ and $F_{postsx}$, are used in combination with that of the inclinometer **401,** i.e. $\Delta\omega$), when used simultaneously, makes it possible to optimize the computed values. Moreover, the knowledge of the geometric position of the components of machine **100** allows informing the operator in real time, in addition to allowing the system to provide instantaneous feedback control over stability-critical parameters, so as to keep machine **100** in a condition of acceptable stability.

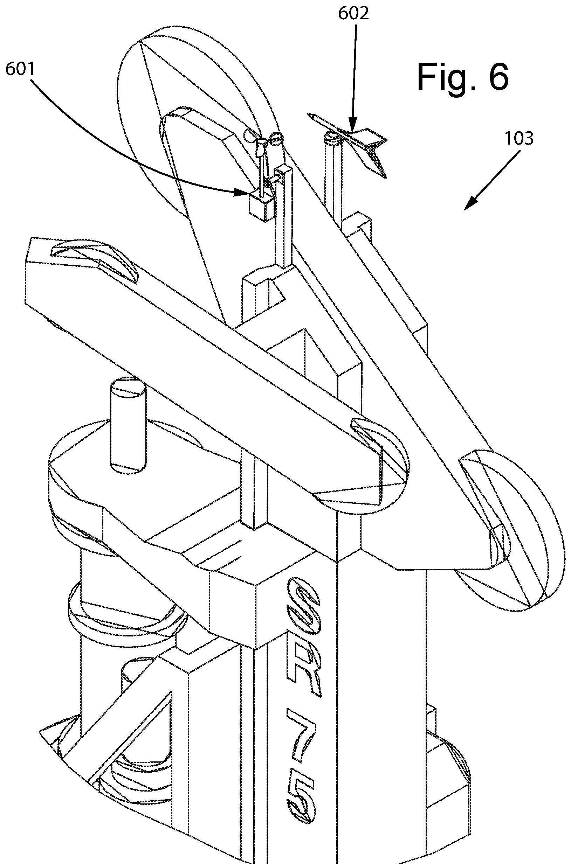

Figure 6 shows a detailed view of the top part of mast **103** of a further construction variant of machine 100. In such area of mast **103,** machine **100** preferably comprises means for detecting the speed of the wind, e.g. an anemometer **601** and a vane **602.** According to a preferred aspect of the present invention, anemometer **601** and vane **602** are configured for computing the influence exerted by the force of the wind, in any direction, upon the residual stability angle.

More in detail, due to the possibility of computing, at any instant, barycentre coordinates **X<sub>G</sub>, Z<sub>G</sub>** at the level of the reference plane **X-Z** based on the reaction forces measured by cells **208** according to the method already described with reference to the preceding figures, in combination with the possibility of measuring the wind intensity and direction variations by means of anemometer **601** and vane **602**, respectively, it is possible to measure, at any instant, the effect that a wind variation causes on the horizontal position of the barycentre, and thus to determine the value of the overturning moment generated by the wind at any instant relative to each overturning line. Since it is known that such overturning moment is a function of wind speed $v_s$, and of the product of resisting surface **A** and ordinate $Y_w$ of the point of application of the force of the wind, and since machine **100** comprises means for measuring such wind speed $v_s$, machine **100** according to the embodiment of Figure 6 permits an accurate computation of the product $A*Y_w$, i.e. the product of the resisting surface and the ordinate of the point of application of the force of the wind, without being bound, in the calculation of the residual stability angle, to assumptions and approximations as to the influence of the wind.

Using the same reference system **X-Y-Z** adopted previously, in fact, a barycentre position variation, caused by a variation of the force of the wind, having a value $\Delta X$, which can still be precisely determined by means of load cells **208,** corresponds to an equivalent moment **Me=m\*g\*$\Delta X$**, where **"m"** is the mass of the machine and **"g"** is the gravitational acceleration. Such equivalent moment corresponds, therefore, to the moment generated by the force of the wind that would cause an equal displacement $\Delta X$ of the barycentre. For simplicity, reference will always be made hereafter to a displacement $\Delta X$ of the barycentre, but it is obvious that the concepts expressed herein will also apply to a displacement $\Delta Z$ in direction **Z** or to a displacement having two components, i.e. one along **X** and one along **Y.**

Being **"p"** the pressure of the wind, **"A"** the resisting surface of the machine, **"Yw"** the ordinate of the point of application of the force of the wind, the following relationship will be obtained:

$$AY_w = \frac{M_e}{\Delta p}$$

According to the current reference standards, wind pressure **"p"** can be computed by using the formula $p = 0,613 * 10^{-3} * v_s^2$, and hence pressure variation "$\Delta p$" can be computed knowing wind speed "$v_s$" both before and after the barycentre position variation (by means of installed anemometer **601).** It is then possible to calculate with precision: **$\Delta p = 0,613 * 10^{-3} * (v_{s2}^2 - v_{s1}^2)$** and hence the product "**$AY_w$**".

According to the prior art, such product is generally obtained via approximations resulting from calculations and standards. As a matter of fact, calculating te wind resisting surface **A** for every possible direction is quite difficult. The resisting surface depends, in fact, on the projection of the machine surfaces on a plane perpendicular to the wind direction and, since the shape of the machine is asymmetric, such surface is different for each wind direction. It is also necessary to take into account the various configurations that the movable parts of the machine can take, in that for each configuration the areas of the surfaces exposed to the wind and the areas of the surfaces shielded by machine components will change. Moreover, the movable parts may also change the height, above ground or relative to a reference plane, of the surfaces being hit by the wind. Therefore, once resisting surface **A** is known, another difficult task is to compute ordinate **Y<sub>w</sub>** of the point of application of the force of the wind. The result of all this is that, in the prior art, in order to make the calculations simpler it was common to use the most penalizing value of the product **A\*Yw,** thus assuming the most unfavourable condition.

By means of the present invention, on the contrary, it is possible to accurately measure said product **A\*Yw** in the field for every direction of the wind, based on the data received from vane **602,** and for every configuration of machine **100.**

By substituting, in the equations of the equivalent moment generated by the wind, the exact value of "$AY_w$" just computed, and by using, for example, only the limit values of **"p"** and "$v_s$", provided by the standards, or the measured values of "$v_s$", it is possible to compute with better precision the influence exerted by the actual forces of the wind upon the residual stability angle, for every wind direction and machine configuration, resulting in a big advantage for safety. The achievement of this result is due, in particular, to load cells **208** positioned on tracked undercarriage **101,** jointly with anemometer **601** and vane **602.**

In an exemplary application of the above, it would thus be possible to position the machine in a location where it is hit by the wind at a given speed and in a given direction with respect to the machine itself, in a specific operating configuration, and in the absence of any external forces and dynamic effects, and then measure the value of **A\*Yw** for that condition and save it into a database included in the software of the machine. Then, by changing several times the orientation of the machine relative to the wind direction, it would be possible to obtain a value of **A\*Yw** for each relative orientation between the machine and the wind. In this way it would be possible to store values of **A\*Yw** for a given number of relative angles equidistant from one another within an interval of 360° (e.g. 8 measurements equally spaced apart by 45°). Such data may subsequently be used by the software for computing and monitoring the stability.

The reference technical standards for excavation machines also require that the effects of the inertia forces acting upon the machine should be taken into consideration in the stability calculations.

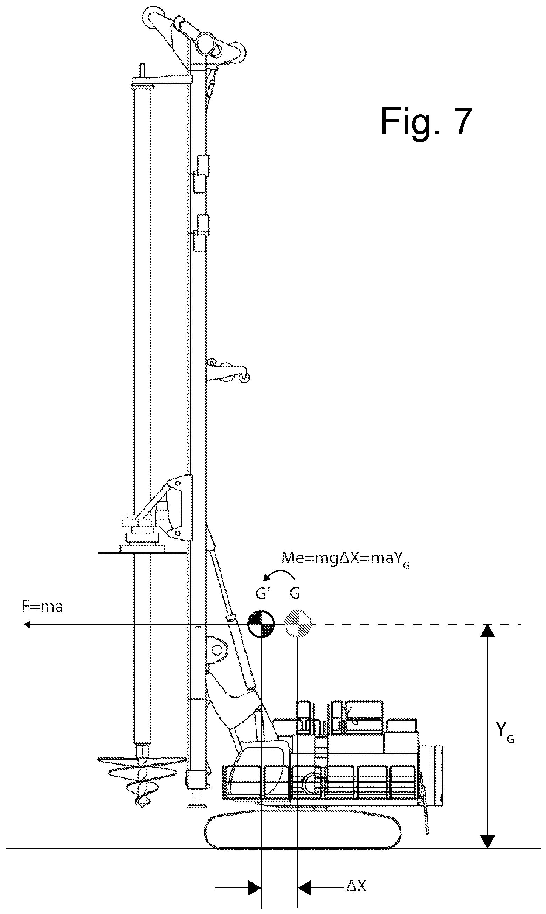

With reference to Figures 4 and 7, the use of accelerometer **403** mounted on machine 100 makes it possible, still on the basis of the indications provided by load cells **208**, to exactly assess the inertia forces and obtain, in this case as well, according to a principle which is alternative to those previously described herein, the value of height coordinate $Y_G$ of the barycentre of machine **100**. In particular, accelerometer **403** is configured for detecting acceleration data "**a**" indicative of the acceleration undergone by base machine **102**. Control system **CPU** is configured for computing barycentre vertical position $Y_G$ as a function of the force data ($F_{antdx}$, $F_{antsx}$, $F_{postdx}$, $F_{postsx}$) and acceleration data **a.**

Advantageously, as shown in more detail in the block diagram of Figure 13, for the computation of height coordinate $Y_G$ by control system **CPU,** acceleration data **a** detected by accelerometer **403** and indicative of the acceleration undergone by base machine **102** between two consecutive instants correspond, in this case as well, to a position variation $\Delta X$ of barycentre planar position $X_G$, $Z_G$ (in particular, between positions **G** and **G'**) in such consecutive instants. Such condition corresponds to an equivalent moment $M_e=m*g*\Delta X$. Furthermore, the above-indicated equivalent moment is equal to $M=m*a*Y_G$.

Therefore, the value of the height coordinate $Y_G$ is computed by the control system according to the following formula:

$$Y_g = \frac{g\Delta X}{a}$$

It is thus also possible, by associating the information from load cells **208,** which permit calculating parameter $\Delta X$, with the information from accelerometer **403,** to obtain a value of $Y_G$ which is calculated in real time, instead of being determined *a priori* with some approximation.

In addition, accelerometer **403** may also be used for effecting a feedback limitation of excessively harsh manoeuvres that might endanger the stability of machine **100** or, more in general, for knowing the accelerations involved in any operating condition.

All these results, when compared and processed by control system **CPU** aboard machine **100,** permit obtaining an instantaneous three-dimensional measurement of position $X_G$, $Y_G$, $Z_G$ of the barycentre of the machine and of the residual stability angle, resulting in improved safety.

This information may then be used for warning the operator by means of well-known audiovisual systems, such as indicator lights, displays, buzzers or the like, and may also start a feedback control procedure to put the machine in a safe condition or prevent the operator from making dangerous manoeuvres.

In light of the above description, in the machines made in accordance with the prior art the sensors of motion actuators **301, 302, 303, 304** alone, without load cells and inclinometer, would only allow for a less precise approximation of the residual stability angle also because such installed sensors **301, 302, 303, 304** would be insufficient to take into account many factors that affect such calculation. For example, it would not be possible to consider the dynamic effect of the motion of fluids like diesel fuel and hydraulic oil, contained in respective tanks installed on base machine **102,** which is generated during the manoeuvres for stopping or starting the machine or when stopping or starting the rotation of base machine **102** relative to the undercarriage. These movements of the fluidic masses are not taken into account in the traditional calculation methods, which consider them to be fixed, thus making an approximation.

Another factor that sensors **301, 302, 303, 304** cannot effectively detect is the movement of the mass of hydraulic hoses, e.g. those that supply the rotary, which change their position depending on the position taken by the rotary along the mast.

In the embodiment of the present invention illustrated herein, on the contrary, such inaccuracies are overcome by relying on instantaneous measurements of forces and angles.

In a further variant implementation (not shown), machine **100** resembles the one previously described, but has six, as opposed to four, load cells **208.**

For example, the six load cells may include:

- a pair of front load cells mounted at the point of connection between a lateral track **204** and front transverse assembly **203a,**
- a pair of other front load cells mounted at the point of connection between the other lateral track **205** and front transverse assembly **203a,**
- a rear load cell mounted at the point of connection between a lateral track **204** and rear transverse assembly **203b,**
- a rear load cell mounted at the point of connection between lateral track **204** and rear transverse assembly **203b.**

As an alternative to such example, the six load cells may include:

- a front load cell mounted at the point of connection between a lateral track **204** and front transverse assembly **203a,**

- a front load cell mounted at the point of connection between the other lateral track **205** and front transverse assembly **203a,**
- a pair of rear load cells mounted at the point of connection between a lateral track **204** and rear transverse assembly **203b,**
- a pair of other rear load cells mounted at the point of connection between lateral track **204** and rear transverse assembly **203b.**

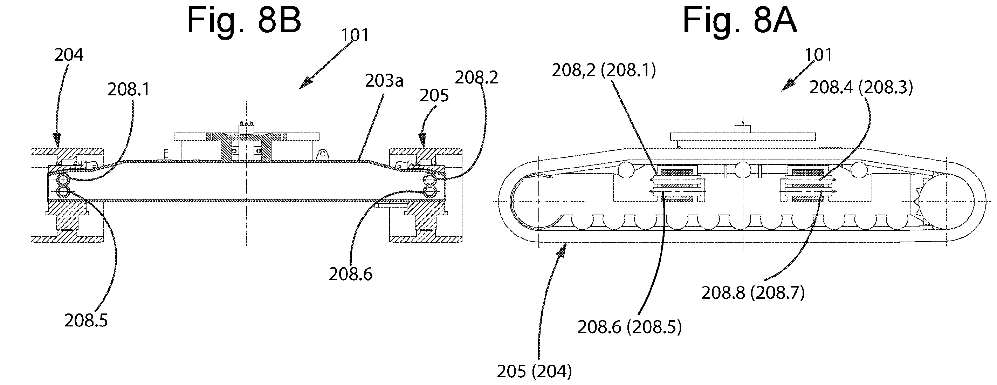

In yet another variant implementation, as shown in Figures **8A** and **8B,** the machine resembles the one previously described, but has eight, as opposed to four, load cells, which include:

- a pair of front load cells **208.1, 208.5** mounted at the point of connection between a lateral track **204** and front transverse assembly **203a,**
- a pair of other front load cells **208.2, 208.6** mounted at the point of connection between the other lateral track **205** and front transverse assembly **203a,**
- a pair of rear load cells **208.3, 208.7** mounted at the point of connection between a lateral track **204** and rear transverse assembly **203b,**
- a pair of other rear load cells **208.4, 208.8** mounted at the point of connection between a lateral track **204** and the rear transverse assembly **203b.**

Therefore, according to such further variant, instead of each one of the four load cells **208** illustrated herein, one pair of load cells **208** is housed at each point of connection between transverse assemblies **203a** and **203b** and tracks **204, 205.** In particular, the two load cells **208** of each pair housed at each connection point are mounted parallel to and offset from each other, thus being non-coaxial to each other (or axially spaced apart).

As visible in the sectional view of Figure 8B, each end of a transverse assembly **203a, 203b** is connected to respective track **204, 206** by means of two respective pin-shaped load cells **208,** which form a double-hinge connection, with mutually offset centres of rotation. As a result, such connection provides a rigid constraint between each transverse assembly **203a, 203b** and respective track **204, 206,** thus permitting no oscillation or rotation of tracks **204** and **205.**

Advantageously, in the control system of machine **100** a feedback/correction software program is implemented, assisted by suitable (visual or not) means, which can interact with the operator to avoid any dangerous situations due to an insufficient residual stability angle.

Advantageously, in the construction variant of the machine wherein the undercarriage has four load cells **208,** the coupling between the end of each transverse assembly **203a, 203b** and the point of connection of respective track **204, 205** may be effected in such a way as to allow a small angle of oscillation of the track, as already explained with reference to Figure 2B. Such small oscillation gives a first advantage of permitting tracks **204, 205** to adapt themselves to small lateral inclinations of the ground, i.e. moderate slopes in a direction transversal to the direction of travel. A second advantage is attained in the presence of overturning moments with respect to one of the two lateral overturning lines **LRLS, LRLD.** In such conditions, when a condition that might lead to overturning is about to occur, a small inclination of central body **202** of the undercarriage and of all the overlying machine will take place, which will make a small rotation relative to track **204, 205** located on the lateral overturning line. The amplitude of such small rotation will be limited by the play existing between the end of each transverse assembly **203a, 203b** and the point of connection of respective track **204, 205.** After this small rotation, the oscillation movement will stop, and track **204 or 205** located on the side opposite to the overturning line, which can also oscillate by a small angle, before rising from the ground will counter the overturning with a significant fraction of its mass.

The operator, being warned by a clear signal that a dangerous situation is about to occur, consisting of the machine tilting relative to track **204** or **205,** will still benefit from sufficient stability to be able to return into safe conditions. This will give the operator or the machine itself more time to take action in order to restore safe conditions. This is only possible for the lateral overturning lines, which are the most critical ones due to construction reasons.

Advantageously, by directly measuring the reaction forces between each lateral track **204, 205** and the respective transverse assembly **203a, 203b,** machine **100** can automatically detect the effects of any variations that may have occurred in the equipment of the machine, thus avoiding to leave up to the operator the task of entering updated data into the software when such a change of equipment is made. Merely by way of example, if excavation tool **106** of the machine is replaced with a heavier tool, the weight of that part of the machine which is suspended from undercarriage **101** will increase and a corresponding increase in the reaction forces measured by cells **208** will occur. From that very instant, the control system of the machine will compute a new position of the barycentre of the machine, which will take into account both the weight of the new tool and the spatial position of such tool.

Of course, without prejudice to the principle of the invention, the forms of embodiment and the implementation details may be extensively varied from those described and illustrated herein by way of non-limiting example, without however departing from the scope of the invention as set out in the appended claims.

**Claims**

1. Machine for making excavations **(100),** comprising a tracked undercarriage **(101)** and a base machine **(102)** supported by said tracked undercarriage **(101);** said tracked undercarriage **(101)** in turn comprising:

   - a frame **(201)** comprising a central body **(202),** a front transverse assembly **(203a)** and a rear transverse assembly **(203b**) connected to said central body **(202)** and protruding from opposite sides of said central body **(202),** and
   - a pair of lateral tracks **(204, 205),** each one of said tracks being connected to an end of the front transverse assembly **(203a)** on one side and to an end of the rear transverse assembly **(203b)** on the other side;

   said base machine **(102)** comprising excavation equipment **(103, 104, 105, 106)** adapted to take different working positions or configurations;
   said machine being **characterized in that** said tracked undercarriage **(101)** further comprises at least four load cells **(208)** including:

   - a front load cell **(208.1)** mounted at the point of connection between a lateral track **(204)** and said front transverse assembly **(203a),**
   - another front load cell **(208.2)** mounted at the point of connection between the other lateral track **(205)** and said front transverse assembly **(203a),**
   - a rear load cell **(208.3)** mounted at the point of connection between a lateral track **(204)** and said rear transverse assembly **(203b),**
   - another rear load cell **(208.4)** mounted at the point of connection between the other lateral track **(205)** and said rear transverse assembly **(203b);**

   **in that** each one of said load cells **(208)** is configured for detecting force data ($F_{antdx}$, $F_{antdx}$, $F_{postax}$, $F_{postsx}$) indicative of the reaction force exerted between the associated lateral track **(204, 205)** and the respective transverse assembly **(203a, 203b);** and
   **in that** said machine further comprises a control system **(CPU)** configured for computing at least a barycentre planar position ($X_G$, $Z_G$) of said machine **(100)** situated substantially at the level of a reference plane **(X-Z),** said barycentre planar position ($X_G$, $Z_G$) being computed as a function of said force data ($F_{antdx}$, $F_{antsx}$, $F_{postdx}$, $F_{postsx}$).

2. Machine according to claim **1,** wherein said control system **(CPU)** is configured for computing said barycentre planar position ($X_G$, $Z_G$) without considering any detections referred to said working positions or configurations taken by said excavation equipment **(103, 104, 105, 106)** of said base machine (102).

3. Machine according to claim **1** or **2,** wherein said control system **(CPU)** is also configured for computing a barycentre vertical position ($Y_G$) of said machine **(100),** which is indicative of the height relative to said reference plane **(X-Z).**

4. Machine according to claim **3,** further comprising an inclinometer **(401)** configured for detecting angle data ($\omega$) indicative of at least one angle of inclination between a reference axis **(X-Z)** of said base machine **(102)** and the direction of the force of gravity; said barycentre vertical position ($Y_G$) being computed by said control system **(CPU)** as a function of said force data ($F_{antdx}$, $F_{antdx}$, $F_{postax}$, $F_{postsx}$) and said angle data ($\omega$).

5. Machine according to claim **4,** wherein said barycentre vertical position ($Y_G$) is computed by said control system **(CPU)** as a function of:

   - the position variation ($\Delta X$) of said barycentre planar position ($X_G$, $Z_G$) in said reference plane **(X-Z),** computed between two consecutive instants, and
   - the angle variation ($\Delta\omega$) of said angle data ($\omega$) detected by said inclinometer **(401)** between said two consecutive instants.

6. Machine according to claim **4** or **5,** wherein said inclinometer **(401)** is of the single-axis type and said angle data ($\omega$) include only one angle of inclination.

7. Machine according to claim **4** or **5,** wherein said inclinometer is of the two-axis type and said angle data ($\omega$) include a pair of angles of inclination.

8. Machine according to any one of claims **3** to **7**, further comprising an accelerometer **(403)** configured for detecting acceleration data **(a)** indicative of the acceleration undergone by said base machine **(102)**; said control system **(CPU)** being configured for computing said barycentre vertical position $(Y_G)$ as a function of said force data $(F_{antdx}, F_{antsx}, F_{postdx}, F_{postsx})$ and said acceleration data **(a)**.

9. Machine according to claim **8**, wherein said barycentre vertical position $(Y_G)$ is computed by said control system **(CPU)** as a function of:

   - the position variation $(\Delta X)$ of said barycentre planar position $(X_G, Z_G)$, computed between two consecutive instants, and
   - said acceleration data **(a)** detected by said accelerometer **(403)** between said two consecutive instants.

10. Machine according to any one of the claims, further comprising an anemometer **(601)** configured for detecting speed data $(v_s)$ indicative of the speed of the wind, and a vane **(602)** configured for detecting direction data **(d)** indicative of the direction of the wind; said control system **(CPU)** being configured for computing the product $(A^*Y_w)$ of the resisting surface **(A)** of said machine **(100)** and the height of the centre of application of the force of the wind $(Y_w)$ as a function of said force data $(F_{antdx}, F_{antsx}, F_{postdx}, F_{postsx})$, said speed data $(v_s)$ and said direction data **(d)**.

11. Machine according to claim **10**, wherein said product $(A^*Y_w)$ being computed by said control system **(CPU)** as a function of:

   - the position variation $(\Delta X)$ of said barycentre planar position $(X_G, Z_G)$, computed between two consecutive instants, and
   - the wind pressure variation $(\Delta p)$ computed on the basis of said speed data $(v_s)$ and said direction data **(d)** detected between said two consecutive instants.

12. Machine according to any one of the preceding claims, wherein said control system **(CPU)** is configured for providing feedback control of the excavation equipment of said base machine **(102)** as a function of at least said barycentre planar position $(X_G, Z_G)$.

13. Machine according to any one of the preceding claims, further comprising an audible and/or visual signalling device co-operating with said control system **(CPU)** and configured for outputting a perceivable danger signal as a function of at least said barycentre planar position $(X_G, Z_G)$.

14. Machine according to any one of the preceding claims, wherein each load cell **(208)** connects the associated lateral track **(204, 205)** and the respective transverse assembly **(203a, 203b)** through a seat **(206)** formed at the end of said respective transverse assembly **(203a, 203b)** and at least one corresponding seat **(207a, 207b)** formed in a portion of said associated track **(204, 205)**.

15. Machine according to claim **14**, wherein each one of said load cells **(208)** is shaped as a substantially cylindrical pin.

16. Machine according to any one of the preceding claims, comprising at least six of said load cells **(208)** distributed among the points of connection between the lateral tracks **(204, 206)** and the transverse assemblies **(203a, 203b)**.

17. Machine according to claim 16, comprising at least eight of said load cells **(208),** including:

   - a pair of front load cells **(208.1, 208.5)** mounted at the point of connection between a lateral track **(204)** and said front transverse assembly **(203a),**
   - a pair of other front load cells **(208.2, 208.6)** mounted at the point of connection between the other lateral track **(205)** and said front transverse assembly **(203a),**
   - a pair of rear load cells **(208.3, 208.7)** mounted at the point of connection between a lateral track **(204)** and said rear transverse assembly **(203b),**
   - a pair of other rear load cells **(208.4, 208.8)** mounted at the point of connection between a lateral track **(204)** and said rear transverse assembly **(203b).**

18. Machine according to claim 17, wherein:

   - said front load cells **(208.1, 208.5)** extend along two respective non-coaxial longitudinal axes;

- said other front load cells **(208.2, 208.6)** extend along two respective non-coaxial longitudinal axes;
- said rear load cells **(208.3, 208.7)** extend along two respective non-coaxial longitudinal axes; and
- said rear load cells **(208.4, 208.8)** extend along two respective non-coaxial longitudinal axes.

19. Machine according to any one of the preceding claims, wherein said transverse assemblies **(203a, 203b)** are rotatably integral with said central body **(202).**

20. Method for controlling a machine **(100)** for making excavations; said method comprising the operative step of:

- providing a drilling machine **(100)** comprising a tracked undercarriage **(101)** and a base machine **(102)** supported by said tracked undercarriage **(101); said tracked undercarriage (101)** in turn comprising:

a frame **(201)** comprising a central body **(202),** a front transverse assembly **(203a)** and a rear transverse assembly (**203b**) connected to said central body **(202)** and protruding from opposite sides of said central body **(202);**
a pair of lateral tracks **(204, 205),** each one of said tracks being connected to an end of the front transverse assembly **(203a)** on one side and to an end of the rear transverse assembly **(203b)** on the other side;
said base machine **(102)** comprising excavation equipment **(103, 104, 105, 106)** adapted to take different working positions or configurations;
said method being **characterized in that** it comprises the operative steps of:

- detecting force data ($F_{antdx}$, $F_{antdx}$, $F_{postdx}$, $F_{postsx}$) indicative of the reaction force exerted between each lateral track **(204, 205)** and each transverse assembly **(203a, 203b)** by means of four load cells (208) including:
- a front load cell **(208.1)** mounted at the point of connection between a lateral track **(204)** and the front transverse assembly **(203a),**
- another front load cell **(208.2)** mounted at the point of connection between the other lateral track **(205)** and the front transverse assembly **(203a),**
- a rear load cell **(208.3)** mounted at the point of connection between a lateral track **(204)** and the rear transverse assembly **(203b),** and
- another rear load cell **(208.4)** mounted at the point of connection between the other lateral track **(205)** and the rear transverse assembly **(203b);**
- computing a barycentre planar position ($X_G$, $Z_G$) referred to the centre of gravity **(G)** of said machine **(100)** and situated substantially at the level of a reference plane **(X-Z)** as a function of said force data ($F_{antdx}$, $F_{antsx}$, $F_{postdx}$, $F_{postsx}$) .

21. Method according to claim **20,** wherein said barycentre planar position ($X_G$, $Z_G$) is computed without considering any detections referred to positions and configurations taken by said excavation equipment **(103, 104, 105, 106)** of said base machine **(102).**

22. Method according to claim **20** or **21,** further comprising the operative step of computing a barycentre vertical position ($Y_G$) referred to the centre of gravity **(G)** of said machine **(100)** and indicative of the height relative to said reference plane **(X-Z).**

23. Method according to claim **22,** further comprising the operative step of detecting, by means of an inclinometer **(401),** angle data ($\omega$) indicative of at least one angle of inclination between a reference axis of said base machine **(102)** substantially perpendicular to said reference plane **(X-Z)** and the direction of the force of gravity; said barycentre vertical position ($Y_G$) being computed as a function of said force data ($F_{antdx}$, $F_{antsx}$, $F_{postdx}$, $F_{postsx}$) and said angle data ($\omega$).

24. Method according to claim **23,** wherein the barycentre vertical position ($Y_G$) is computed as a function of:

- the position variation ($\Delta X$) of said barycentre planar position ($X_G$, $Z_G$), computed between two consecutive instants, and
- the angle variation ($\Delta\omega$) of said angle data ($\omega$) detected between said two consecutive instants.

25. Method according to any one of claims **22** to **24,** further comprising the operative step of detecting, by means of an accelerometer **(403),** acceleration data **(a)** indicative of the acceleration undergone by said base machine (102); said barycentre vertical position ($Y_G$) being computed as a function of said force data ($F_{antdx}$, $F_{antsx}$, $F_{postdx}$, $F_{postsx}$) and said acceleration data (a).

26. Method according to claim **25,** wherein said barycentre vertical position ($Y_G$) is computed as a function of:

- the position variation ($\Delta X$) of said barycentre planar position ($X_G$, $Z_G$), computed between two consecutive instants, and
- said acceleration data **(a)** detected between said two consecutive instants.

27. Method according to any one of claims **20** to **26,** further comprising the operative steps of:

- detecting, by means of an anemometer **(601),** speed data ($v_s$) indicative of the speed of the wind and, by means of a vane **(602),** direction data **(d)** indicative of the direction of the wind;
- computing the product ($A*Y_w$) of the resisting surface **(A)** of said machine **(100)** and the height of the centre of application of the force of the wind ($Y_w$) as a function of said force data ($F_{antdx}$, $F_{antsx}$, $F_{postdx}$, $F_{postsx}$), said speed data ($v_s$) and said direction data **(d).**

28. Method according to claim **27,** wherein said product ($A*Y_w$) is computed as a function of:

- the position variation ($\Delta X$) of said barycentre planar position ($X_G$, $Z_G$), computed between two consecutive instants, and
- the wind pressure variation ($\Delta p$) computed on the basis of said speed data ($v_s$) and said direction data **(d)** detected between said two consecutive instants.

29. Method according to any one of the preceding claims, further comprising the operative step of providing feedback control of said base machine **(102)** as a function of at least one parameter selected from the group including: said barycentre planar position ($X_G$, $Z_G$), said barycentre vertical position ($Y_G$) and said product ($A*Y_w$).

30. Method according to any one of the preceding claims, further comprising the operative step of outputting a perceivable danger signal as a function of at least one parameter selected from the group including said barycentre planar position ($X_G$, $Z_G$), said barycentre vertical position ($Y_G$) and said product ($A*Y_w$).

**Patentansprüche**

1. Maschine zum Durchführen von Grabungen (100), aufweisend ein Gleiskettenfahrwerk (101) und eine Basismaschine (102), die von dem Gleiskettenfahrwerk (101) getragen wird; wobei das Gleiskettenfahrwerk (101) seinerseits aufweist:

- einen Rahmen (201) mit einem zentralen Körper (202), einer vorderen Queranordnung (203a) und einer hinteren Queranordnung (203b), die mit dem zentralen Körper (202) verbunden sind und von gegenüberliegenden Seiten des zentralen Körpers (202) vorstehen, und
- ein Paar seitlicher Gleisketten (204, 205), wobei jede der Gleisketten mit einem Ende der vorderen Queranordnung (203a) auf einer Seite und mit einem Ende der hinteren Queranordnung (203b) auf der anderen Seite verbunden ist; wobei die Basismaschine (102) eine Aushubausrüstung (103, 104, 105, 106) aufweist, die geeignet ist, verschiedene Arbeitspositionen oder Konfigurationen einzunehmen;

wobei die Maschine **dadurch gekennzeichnet ist, dass** das Gleiskettenfahrwerk (101) ferner mindestens vier Kraftmessdosen (208) aufweist, darunter:

- eine vordere Kraftmessdose (208.1), die an der Verbindungsstelle zwischen einer seitlichen Gleiskette (204) und der vorderen Queranordnung (203a) angebracht ist,
- eine weitere vordere Kraftmessdose (208.2), die an der Verbindungsstelle zwischen der anderen seitlichen Gleiskette (205) und der vorderen Queranordnung (203a) angebracht ist,
- eine hintere Kraftmessdose (208.3), die an der Verbindungsstelle zwischen einer seitlichen Gleiskette (204) und der hinteren Queranordnung (203b) angebracht ist,
- eine weitere hintere Kraftmessdose (208.4), die an der Verbindungsstelle zwischen der anderen seitlichen Gleiskette (205) und der hinteren Queranordnung (203b) angebracht ist;

dadurch, dass jede der Kraftmessdosen (208) so konfiguriert ist, dass sie Kraftdaten ($F_{antdx}$, $F_{antsx}$, $F_{postdx}$, $F_{postsx}$) erfasst, die die Reaktionskraft anzeigen, die zwischen der zugehörigen seitlichen Gleiskette (204, 205) und der jeweiligen Queranordnung (203a, 203b) ausgeübt wird; und

dadurch, dass die Maschine außerdem ein Steuersystem (CPU) aufweist, das konfiguriert ist, mindestens eine Ebenenposition des Schwerpunkts ($X_G$, $Z_G$) der Maschine (100) zu berechnen, die sich im Wesentlichen auf der Ebene einer Bezugsebene (X-Z) befindet, wobei die Ebenenposition des Schwerpunkts ($X_G$, $Z_G$) in Abhängigkeit von den Kraftdaten ($F_{antdx}$, $F_{antsx}$, $F_{postdx}$, $F_{postsx}$) berechnet wird.

2. Maschine nach Anspruch. 1, wobei das Steuersystem (CPU) konfiguriert ist, die Ebenenposition des Schwerpunkts ($X_G$, $Z_G$) zu berechnen, ohne irgendwelche Erfassungen zu berücksichtigen, die sich auf die Arbeitspositionen oder Konfigurationen beziehen, die von der Aushubausrüstung (103, 104, 105, 106) der Basismaschine (102) eingenommen werden.

3. Maschine nach Anspruch 1 oder 2, wobei das Steuersystem (CPU) auch zum Berechnen einer vertikalen Position des Schwerpunkts ($Y_G$) der Maschine (100) konfiguriert ist, die die Höhe relativ zur Bezugsebene (X-Z) angibt.

4. Maschine nach Anspruch 3, die ferner einen Neigungsmesser (401) aufweist, der konfiguriert ist, Winkeldaten (w) zu erfassen, die mindestens einen Neigungswinkel zwischen einer Bezugsachse (X-Z) der Basismaschine (102) und der Richtung der Schwerkraft anzeigen; wobei die vertikale Position des Schwerpunkts ($Y_G$) von dem Steuersystem (CPU) als eine Funktion der Kraftdaten ($F_{antdx}$, $F_{antsx}$, $F_{postdx}$, $F_{postsx}$) und der Winkeldaten (w) berechnet wird.

5. Maschine nach Anspruch 4, wobei die vertikale Position des Schwerpunkts ($Y_G$) von dem Steuersystem (CPU) berechnet wird als eine Funktion von:

- der Positionsänderung ($\Delta X$) der Ebenenposition des Schwerpunkts ($X_G$, $Z_G$) in der Bezugsebene (X-Z), die zwischen zwei aufeinanderfolgenden Zeitpunkten berechnet wird, und
- der Winkeländerung ($\Delta\omega$) der Winkeldaten ($\omega$), die von dem Neigungsmesser (401) zwischen zwei aufeinanderfolgenden Zeitpunkten erfasst werden.

6. Maschine nach Anspruch 4 oder 5, wobei der Neigungsmesser (401) vom einachsigen Typ ist und die Winkeldaten (w) nur einen Neigungswinkel aufweisen.

7. Maschine nach Anspruch 4 oder 5, wobei der Neigungsmesser vom Zwei-Achsen-Typ ist und die Winkeldaten (w) ein Paar von Neigungswinkeln aufweisen.

8. Maschine nach einem der Ansprüche 3 bis 7, die ferner einen Beschleunigungsmesser (403) aufweist, der konfiguriert ist, Beschleunigungsdaten (a) zu erfassen, die die von der Basismaschine (102) ausgeübte Beschleunigung anzeigen; wobei das Steuersystem (CPU) konfiguriert ist, die vertikale Position des Schwerpunkts ($Y_G$) als eine Funktion von den Kraftdaten ($F_{antdx}$, $F_{antsx}$, $F_{postdx}$, $F_{postsx}$) und den Beschleunigungsdaten (a) zu berechnen.

9. Maschine nach Anspruch 8, wobei die vertikale Position des Schwerpunkts ($Y_G$) von dem Steuersystem (CPU) berechnet wird als eine Funktion von:

- der Positionsänderung ($\Delta X$) der Ebenenposition des Schwerpunkts ($X_G$, $Z_G$), die zwischen zwei aufeinanderfolgenden Zeitpunkten berechnet wird,
und
- den Beschleunigungsdaten (a), die von dem Beschleunigungsmesser (403) zwischen den beiden aufeinanderfolgenden Zeitpunkten erfasst werden.

10. Maschine nach einem der Ansprüche, ferner aufweisend ein Anemometer (601), das zum Erfassen von Geschwindigkeitsdaten ($v_s$) konfiguriert ist, die die Geschwindigkeit des Windes angeben, und einen Flügel (602), der zum Erfassen von Richtungsdaten (d) konfiguriert ist, die die Richtung des Windes angeben; wobei das Steuersystem (CPU) konfiguriert ist, das Produkt ($A*Y_w$) der Widerstandsfläche (A) der Maschine (100) und der Höhe des Kraftangriffspunkts des Windes ($Y_W$) als Funktion der Kraftdaten ($F_{antdx}$, $F_{antsx}$, $F_{postdx}$, $F_{postsx}$), der Geschwindigkeitsdaten ($v_s$) und der Richtungsdaten (d) zu berechnen.

11. Maschine nach Anspruch 10, wobei das Produkt ($A*Y_w$) durch das Steuersystem (CPU) berechnet wird als eine Funktion von:

- der Positionsänderung ($\Delta$X) der Ebenenposition des Schwerpunkts ($X_G$, $Z_G$), die zwischen zwei aufeinanderfolgenden Zeitpunkten berechnet wird, und

- der Winddruckänderung ($\Delta$p), die auf der Grundlage der Geschwindigkeitsdaten ($v_s$) und der Richtungsdaten (d) berechnet wird, die zwischen den beiden aufeinanderfolgenden Zeitpunkten erfasst werden.

12. Maschine nach einem der vorhergehenden Ansprüche, wobei das Steuersystem (CPU) konfiguriert ist, eine Rückkopplungssteuerung der Aushubausrüstung der Basismaschine (102) in Abhängigkeit von mindestens der Ebenenposition des Schwerpunkts ($X_G$, $Z_G$) bereitzustellen.

13. Maschine nach einem der vorhergehenden Ansprüche, ferner aufweisend eine akustische und/oder optische Signaleinrichtung, die mit dem Steuerungssystem (CPU) zusammenwirkt und zum Ausgeben eines wahrnehmbaren Gefahrensignals in Abhängigkeit von mindestens der Ebenenposition des Schwerpunkts ($X_G$, $Z_G$) konfiguriert ist.

14. Maschine nach einem der vorhergehenden Ansprüche, wobei jede Kraftmessdose (208) die zugehörige seitliche Gleiskette (204, 205) und die jeweilige Queranordnung (203a, 203b) durch einen Sitz (206), der am Ende der jeweiligen Queranordnung (203a, 203b) ausgebildet ist, und mindestens einen entsprechenden Sitz (207a, 207b), der in einem Abschnitt der zugehörigen Gleiskette (204, 205) ausgebildet ist, miteinander verbindet.

15. Maschine nach Anspruch 14, wobei jede der Kraftmessdosen (208) als ein im Wesentlichen zylindrischer Stift geformt ist.

16. Maschine nach einem der vorhergehenden Ansprüche, mit mindestens sechs der genannten Kraftmessdosen (208), die auf die Verbindungspunkte zwischen den seitlichen Gleisketten (204, 205) und den Queranordnungen (203a, 203b) verteilt sind.

17. Maschine nach Anspruch 16, aufweisend mindestens acht der genannten Kraftmessdosen (208), darunter:

- ein Paar vorderer Kraftmessdosen (208.1, 208.5), die an der Verbindungsstelle zwischen einer seitlichen Gleiskette (204) und der vorderen Queranordnung (203a) angebracht sind,
- ein Paar weiterer vorderer Kraftmessdosen (208.2, 208.6), die an der Verbindungsstelle zwischen der anderen seitlichen Gleiskette (205) und der vorderen Queranordnung (203a) angebracht sind,
- ein Paar hinterer Kraftmessdosen (208.3, 208.7), die an der Verbindungsstelle zwischen einer seitlichen Gleiskette (204) und der hinteren Queranordnung (203b) angebracht sind,
- ein Paar weiterer hinterer Kraftmessdosen (208.4, 208.8), die an der Verbindungsstelle zwischen einer seitlichen Gleiskette (204) und der hinteren Queranordnung (203b) angebracht sind.

18. Maschine nach Anspruch 17, wobei:

- die vorderen Kraftmessdosen (208.1, 208.5) sich entlang zweier nicht koaxialer Längsachsen erstrecken;
- die weiteren vorderen Kraftmessdosen (208.2, 208.6) sich entlang zweier jeweiliger nicht-koaxialer Längsachsen erstrecken;
- die hinteren Kraftmessdosen (208.3, 208.7) sich entlang zweier jeweiliger nicht-koaxialer Längsachsen erstrecken; und
- die hinteren Kraftmessdosen (208.4, 208.8) sich entlang zweier jeweiliger nicht-koaxialer Längsachsen erstrecken.

19. Maschine nach einem der vorhergehenden Ansprüche, wobei die Queranordnungen (203a, 203b) drehbar mit dem zentralen Körper (202) verbunden sind.

20. Verfahren zur Steuerung einer Maschine (100) zum Durchführen von Ausgrabungen; wobei das Verfahren den folgenden operativen Schritt aufweist:

- Bereitstellen einer Bohrvorrichtung (100), die ein Gleiskettenfahrwerk (101) und eine Basismaschine (102) aufweist, die von dem Gleiskettenfahrwerk (101) getragen wird; wobei das Gleiskettenfahrwerk (101) seinerseits aufweist:

einen Rahmen (201) mit einem zentralen Körper (202), einer vorderen Queranordnung (203a) und einer hinteren Queranordnung (203b), die mit dem zentralen Körper (202) verbunden sind und von gegenüberliegenden Seiten des zentralen Körpers (202) vorstehen;

ein Paar seitlicher Gleisketten (204, 205), wobei jede der Gleisketten mit einem Ende der vorderen Queranordnung (203a) auf einer Seite und mit einem Ende der hinteren Queranordnung (203b) auf der anderen Seite verbunden ist;

wobei die Basismaschine (102) eine Aushubausrüstung (103, 104, 105, 106) aufweist, die verschiedene Arbeitspositionen oder Konfigurationen einnehmen kann;

wobei das Verfahren **dadurch gekennzeichnet ist, dass** es die folgenden operativen Schritte aufweist:

- Erfassen von Kraftdaten ($F_{antdx}$, $F_{antsx}$, $F_{postdx}$, $F_{postsx}$), die die Reaktionskraft anzeigen, die zwischen jeder seitlichen Gleiskette (204, 205) und jeder Queranordnung (203a, 203b) ausgeübt wird, mit Hilfe von vier Kraftmessdosen (208), die aufweisen:

- eine vordere Kraftmessdose (208.1), die an der Verbindungsstelle zwischen einer seitlichen Gleiskette (204) und der vorderen Queranordnung (203a) angebracht ist,

- eine weitere vordere Kraftmessdose (208.2), die an der Verbindungsstelle zwischen der anderen seitlichen Gleiskette (205) und der vorderen Queranordnung (203a) angebracht ist,

- eine hintere Kraftmessdose (208.3), die an der Verbindungsstelle zwischen einer seitlichen Gleiskette (204) und der hinteren Queranordnung (203b) angebracht ist, und

- eine weitere hintere Kraftmessdose (208.4), die an der Verbindungsstelle zwischen der anderen seitlichen Gleiskette (205) und der hinteren Queranordnung (203b) angebracht ist;

- Berechnen einer Ebenenposition des Schwerpunkts ($X_G$, $Z_G$), die sich auf den Schwerpunkt (G) der genannten Maschine (100) bezieht und im Wesentlichen auf der Höhe einer Bezugsebene (X-Z) liegt, in Abhängigkeit von den genannten Kraftdaten ($F_{antdx}$, $F_{antsx}$, $F_{postdx}$, $F_{postsx}$).

21. Verfahren nach Anspruch 20, bei dem die Ebenenposition des Schwerpunkts ($X_G$, $Z_G$) berechnet wird, ohne irgendwelche Erfassungen zu berücksichtigen, die sich auf Positionen und Konfigurationen beziehen, die von der Aushubausrüstung (103, 104, 105, 106) der Basismaschine (102) eingenommen werden.

22. Verfahren nach Anspruch 20 oder 21, das ferner den operativen Schritt des Berechnens einer vertikalen Position des Schwerpunkts ($Y_G$) in Bezug auf den Schwerpunkt (G) der Maschine (100) aufweist, die die Höhe in Bezug auf die Referenzebene (X-Z) angibt.

23. Verfahren nach Anspruch 22, das ferner den operativen Schritt des Erfassens von Winkeldaten (w) mittels eines Neigungsmessers (401) aufweist, die wenigstens einen Neigungswinkel zwischen einer Bezugsachse der Basismaschine (102), die im Wesentlichen senkrecht zu der Bezugsebene (X-Z) ist, und der Richtung der Schwerkraft anzeigen; wobei die vertikale Position des Schwerpunkts ($Y_G$) als eine Funktion der Kraftdaten ($F_{antdx}$, $F_{antsx}$, $F_{postdx}$, $F_{postsx}$) und der Winkeldaten (w) berechnet wird.

24. Verfahren nach Anspruch 23, wobei die vertikale Position des Schwerpunkts ($Y_G$) berechnet wird als eine Funktion von:

- der Positionsänderung ($\Delta X$) der Ebenenposition des Schwerpunkts ($X_G$, $Z_G$), die zwischen zwei aufeinanderfolgenden Zeitpunkten berechnet wird,
und
- der Winkeländerung ($\Delta\omega$) der Winkeldaten ($\omega$), die zwischen den beiden aufeinanderfolgenden Zeitpunkten ermittelt wurden.

25. Verfahren nach einem der Ansprüche 22 bis 24, das ferner den operativen Schritt des Erfassens von Beschleunigungsdaten (a) mittels eines Beschleunigungsmessers (403) aufweist, die die von der Basismaschine (102) erfahrene Beschleunigung anzeigen; wobei die vertikale Position des Schwerpunkts ($Y_G$) als eine Funktion der Kraftdaten ($F_{antdx}$, $F_{antsx}$, $F_{postdx}$, $F_{postsx}$) und der Beschleunigungsdaten (a) berechnet wird.

26. Verfahren nach Anspruch 25, wobei die vertikale Position des Schwerpunkts ($Y_G$) berechnet wird als eine Funktion von:

- der Positionsänderung ($\Delta X$) der Ebenenposition des Schwerpunkts ($X_G$, $Z_G$), die zwischen zwei aufeinanderfolgenden Zeitpunkten berechnet wird,
und

- der zwischen den beiden aufeinanderfolgenden Zeitpunkten erfassten Beschleunigungsdaten (a).

27. Verfahren nach einem der Ansprüche 20 bis 26, ferner aufweisend die folgenden operativen Schritte:

- Erfassen von Geschwindigkeitsdaten ($v_s$), die die Windgeschwindigkeit angeben, mit Hilfe eines Anemometers (601) und von Richtungsdaten (d), die die Windrichtung angeben, mittels eines Flügels (602);
- Berechnen des Produkts ($A*Y_w$) aus der Widerstandsfläche (A) der Maschine (100) und der Höhe des Kraftangriffspunkts des Windes ($Y_W$) in Abhängigkeit von den Kraftdaten ($F_{antdx}$, $F_{antsx}$, $F_{postdx}$, $F_{postsx}$), den Geschwindigkeitsdaten (vs) und den Richtungsdaten (d).

28. Verfahren. nach Anspruch. 27, wobei das Produkt ($A*Y_w$) berechnet wird als eine Funktion von:

- der Positionsänderung ($\triangle X$) der Ebenenposition des Schwerpunkts ($X_G$, $Z_G$), die zwischen zwei aufeinanderfolgenden Zeitpunkten berechnet wird,
und
- der Winddruckänderung ($\triangle p$), die auf der Grundlage der Geschwindigkeitsdaten ($v_s$) und der Richtungsdaten (d) berechnet wird, die zwischen den beiden aufeinanderfolgenden Zeitpunkten erfasst werden.

29. Verfahren nach einem der vorangehenden Ansprüche, das ferner den operativen Schritt des Bereitstellens einer Rückkopplungssteuerung der Basismaschine (102) in Abhängigkeit von mindestens einem Parameter aufweist, der aus der Gruppe ausgewählt ist, die Folgendes umfasst: die Ebenenposition des Schwerpunkts ($X_G$, $Z_G$), die vertikale Position des Schwerpunkts ($Y_G$) und das Produkt ($A*Y_W$).

30. Verfahren nach einem der vorhergehenden Ansprüche, das ferner den operativen Schritt der Ausgabe eines wahrnehmbaren Gefahrensignals in Abhängigkeit von mindestens einem Parameter umfasst, der aus der Gruppe ausgewählt ist, die die Ebenenposition des Schwerpunkts ($X_G$, $Z_G$), die vertikale Position des Schwerpunkts ($Y_G$) und das Produkt ($A*Y_w$) umfasst.

**Revendications**

1. Machine pour réaliser des excavations **(100),** comprenant un train de roulement à chenilles **(101)** et une machine de base **(102)** supportée par ledit train de roulement à chenilles **(101)** ; ledit train de roulement à chenilles **(101)** comprenant à son tour :

- un cadre **(201)** comprenant un corps central **(202),** un ensemble transversal avant **(203a)** et un ensemble transversal arrière **(203b)** reliés audit corps central **(202)** et faisant saillie à partir de côtés opposés dudit corps central **(202),** et
- une paire de chenilles latérales **(204, 205),** chacune desdites chenilles étant reliée à une extrémité de l'ensemble transversal avant **(203a)** d'un certain côté et à une extrémité de l'ensemble transversal arrière **(203b)** de l'autre côté ;

ladite machine de base **(102)** comprenant un équipement d'excavation **(103, 104, 105, 106)** adapté pour prendre différentes positions ou configurations de travail ;
ladite machine étant **caractérisée en ce que** ledit train de roulement à chenilles **(101)** comprend en outre au moins quatre cellules de charge **(204, 206)** comprenant :

- une cellule de charge avant **(204, 206.1)** montée au niveau du point de liaison entre une chenille latérale **(204)** et ledit ensemble transversal avant **(203a),**
- une autre cellule de charge avant **(204, 206.2)** montée au niveau du point de liaison entre l'autre chenille latérale **(205)** et ledit ensemble transversal avant **(203a),**
- une cellule de charge arrière **(204, 206.3)** montée au niveau du point de liaison entre une chenille latérale **(204)** et ledit ensemble transversal arrière **(203b),**
- une autre cellule de charge arrière **(204, 206.4)** montée au niveau du point de liaison entre l'autre chenille latérale **(205)** et ledit ensemble transversal arrière **(203b)** ;

**en ce que** chacune desdites cellules de charge **(204, 206)** est configurée pour détecter des données de force **($F_{antdx}$, $F_{antsx}$, $F_{postdx}$, $F_{postsx}$)** indicatives de la force de réaction exercée entre la chenille latérale associée **(204, 205)** et l'ensemble transversal respectif **(203a, 203b)** ; et

**en ce que** ladite machine comprend en outre un système de commande **(CPU)** configuré pour calculer au moins une position plane de barycentre **(X$_G$, Z$_G$)** de ladite machine **(100)** située sensiblement au niveau d'un plan de référence **(X-Z)**, ladite position plane de barycentre **(X$_G$, Z$_G$)** étant calculée en fonction desdites données de force **(F$_{antdx}$, F$_{antsx}$, F$_{postdx}$, F$_{postsx}$)**.

2. Machine selon la revendication 1, dans laquelle ledit système de commande **(CPU)** est configuré pour calculer ladite position plane de barycentre **(X$_G$, Z$_G$)** sans tenir compte de quelconques détections faisant référence auxdites positions ou configurations de travail prises par ledit équipement d'excavation **(103, 104, 105, 106)** de ladite machine de base **(102).**

3. Machine selon la revendication 1 ou 2, dans laquelle ledit système de commande **(CPU)** est également configuré pour calculer une position verticale de barycentre **(Y$_G$)** de ladite machine **(100),** qui est indicative de la hauteur par rapport audit plan de référence **(X-Z).**

4. Machine selon la revendication 3, comprenant en outre un inclinomètre **(401)** configuré pour détecter des données d'angle **(ω)** indicatives d'au moins un angle d'inclinaison entre un axe de référence **(X-Z)** de ladite machine de base **(102)** et la direction de la force de gravité ; ladite position verticale de barycentre **(Y$_G$)** étant calculée par ledit système de commande **(CPU)** en fonction desdites données de force **(F$_{antdx}$, F$_{antsxr}$, F$_{postsx}$, F$_{postsx}$)** et desdites données d'angle **(ω).**

5. Machine selon la revendication 4, dans laquelle ladite position verticale de barycentre **(Y$_G$)** est calculée par ledit système de commande **(CPU)** en fonction de :

   - la variation de position **(ΔX)** de ladite position plane de barycentre **(X$_G$, Z$_G$)** dans ledit plan de référence **(X-Z),** calculée entre deux instants consécutifs, et
   - la variation d'angle **(Δω)** desdites données d'angle **(ω)** détectée par ledit inclinomètre **(401)** entre lesdits deux instants consécutifs.

6. Machine selon la revendication 4 ou 5, dans laquelle ledit inclinomètre **(401)** est du type à axe unique, et lesdites données d'angle **(ω)** n'incluent qu'un seul angle d'inclinaison.

7. Machine selon la revendication 4 ou 5, dans laquelle ledit inclinomètre est du type à deux axes, et lesdites données d'angle **(ω)** incluent une paire d'angles d'inclinaison.

8. Machine selon l'une quelconque des revendications 3 à 7, comprenant en outre un accéléromètre **(403)** configuré pour détecter des données d'accélération **(a)** indicatives de l'accélération subie par ladite machine de base **(102)** ; ledit système de commande **(CPU)** étant configuré pour calculer ladite position verticale de barycentre **(Y$_G$)** en fonction desdites données de force **(F$_{antdx}$, F$_{antsx}$, F$_{postdx}$, F$_{postsx}$)** et desdites données d'accélération **(a)**.

9. Machine selon la revendication 8, dans laquelle ladite position verticale de barycentre **(Y$_G$)** est calculée par ledit système de commande **(CPU)** en fonction de :

   - la variation de position **(ΔX)** de ladite position plane de barycentre **(X$_G$, Z$_G$),** calculée entre deux instants consécutifs, et
   - lesdites données d'accélération **(a)** détectées par ledit accéléromètre **(403)** entre lesdits deux instants consécutifs.

10. Machine selon l'une quelconque des revendications, comprenant en outre un anémomètre **(601)** configuré pour détecter des données de vitesse **(v$_s$)** indicatives de la vitesse du vent, et une girouette **(602)** configurée pour détecter des données de direction **(d)** indicatives de la direction du vent ; ledit système de commande **(CPU)** étant configuré pour calculer le produit **(A*Y$_w$)** de la surface résistante **(A)** de ladite machine **(100)** et la hauteur du centre d'application de la force du vent **(Y$_w$)** en fonction desdites données de force **(F$_{antdx}$, F$_{antsx}$, F$_{postdx}$, F$_{postsx}$),** desdites données de vitesse **(v$_s$)** et desdites données de direction (d).

11. Machine selon la revendication 10, dans laquelle ledit produit **(A*Yw)** est calculé par ledit système de commande **(CPU)** en fonction de :

- la variation de position **(ΔX)** de ladite position plane de barycentre **($X_G$, $Z_G$),** calculée entre deux instants consécutifs, et
- la variation de pression de vent **(Δp)** calculée sur la base desdites données de vitesse **($v_s$)** et desdites données de direction **(d)** détectées entre lesdits deux instants consécutifs.

12. Machine selon l'une quelconque des revendications précédentes, dans laquelle ledit système de commande **(CPU)** est configuré pour fournir une commande de rétroaction de l'équipement d'excavation de ladite machine de base **(102)** en fonction d'au moins ladite position plane de barycentre **($X_G$, $Z_G$).**

13. Machine selon l'une quelconque des revendications précédentes, comprenant en outre un dispositif de signalisation sonore et/ou visuelle coopérant avec ledit système de commande (CPU) et configuré pour délivrer en sortie un signal de danger perceptible en fonction d'au moins ladite position plane de barycentre **($X_G$, $Z_G$).**

14. Machine selon l'une quelconque des revendications précédentes, dans laquelle chaque cellule de charge (204, 206) relie la chenille latérale associée **(204, 205)** et l'ensemble transversal respectif **(203a, 203b) à** travers un siège **(206)** formé au niveau de l'extrémité dudit ensemble transversal respectif **(203a, 203b)** et au moins un siège correspondant **(207a, 207b)** formé dans une partie de ladite chenille associée **(204, 205).**

15. Machine selon la revendication 14, dans laquelle chacune desdites cellules de charge (204, 206) est mise en forme sous la forme d'une broche sensiblement cylindrique.

16. Machine selon l'une quelconque des revendications précédentes, comprenant au moins six desdites cellules de charge (204, 206) réparties entre les points de liaison entre les chenilles latérales **(204, 206)** et les ensembles transversaux **(203a, 203b).**

17. Machine selon la revendication 16, comprenant au moins huit desdites cellules de charge **(204, 206),** y compris :

    - une paire de cellules de charge avant **(204, 206.1, 204, 206.5)** montées au niveau du point de liaison entre une certaine chenille latérale **(204)** et ledit ensemble transversal avant **(203a),**
    - une paire d'autres cellules de charge avant **(204, 206.2, 204, 206.6)** montées au point de liaison entre l'autre voie latérale **(205)** et ledit ensemble transversal avant **(203a),**
    - une paire de cellules de charge arrière **(204, 206.3, 204, 206.7)** montées au niveau du point de liaison entre une chenille latérale **(204)** et ledit ensemble transversal arrière **(203b),**
    - une paire d'autres cellules de charge arrière **(204, 206.4, 204, 206.8)** montées au niveau du point de liaison entre une chenille latérale **(204)** et ledit ensemble transversal arrière **(203b).**

18. Machine selon la revendication 17, dans laquelle

    - lesdites cellules de charge avant **(204, 206.1, 204, 206.5)** s'étendent le long de deux axes longitudinaux non coaxiaux respectifs ;
    - lesdites autres cellules de charge avant **(204, 206.2, 204, 206.6)** s'étendent le long de deux axes longitudinaux non coaxiaux respectifs ;
    - lesdites cellules de charge arrière **(204, 206.3, 204, 206.7)** s'étendent le long de deux axes longitudinaux non coaxiaux respectifs ; et
    - lesdites cellules de charge arrière **(204, 206.4, 204, 206.8)** s'étendent le long de deux axes longitudinaux non coaxiaux respectifs.

19. Machine selon l'une quelconque des revendications précédentes, dans laquelle lesdits ensembles transversaux **(203a, 203b)** sont solidaires en rotation dudit corps central **(202).**

20. Procédé permettant de commander une machine **(100)** pour effectuer des excavations ; ledit procédé comprenant l'étape opératoires consistant à :

    - fournir une machine de forage **(100)** comprenant un train de roulement à chenilles **(101)** et une machine de base **(102)** supportée par ledit train de roulement à chenilles **(101)** ; ledit train de roulement à chenilles **(101)** comprenant à son tour :

        un cadre **(201)** comprenant un corps central **(202),** un ensemble transversal avant **(203a)** et un ensemble transversal arrière **(203b)** reliés audit corps central **(202)** et faisant saillie à partir de côtés opposés dudit corps central **(202)** ;

une paire de chenilles latérales **(204, 205),** chacune desdites chenilles étant reliée à une extrémité de l'ensemble transversal avant **(203a)** d'un certain côté et à une extrémité de l'ensemble transversal arrière **(203b)** de l'autre côté ;

ladite machine de base **(102)** comprenant un équipement d'excavation **(103, 104, 105, 106)** adapté pour prendre différentes positions ou configurations de travail ;

ledit procédé étant **caractérisé en ce qu'**il comprend les étapes opératoires consistant à :

- détecter des données de force (**F**$_{antdx}$, **F**$_{antsx}$, **F**$_{postdx}$, **F**$_{postsx}$) indicatives de la force de réaction exercée entre chaque chenille latérale **(204, 205)** et chaque ensemble transversal **(203a, 203b)** au moyen de quatre cellules de charge **(204, 206)** incluant :

- une cellule de charge avant **(204, 206.1)** montée au niveau du point de liaison entre une chenille latérale **(204)** et l'ensemble transversal avant **(203a),**

- une autre cellule de charge avant **(204, 206.2)** montée au niveau du point de liaison entre l'autre chenille latérale **(205)** et l'ensemble transversal avant **(203a),**

- une cellule de charge arrière **(204, 206.3)** montée au niveau du point de liaison entre une chenille latérale **(204)** et l'ensemble transversal arrière **(203b),** et

- une autre cellule de charge arrière **(204, 206.4)** montée au niveau du point de liaison entre l'autre chenille latérale **(205)** et l'ensemble transversal arrière **(203b)** ;

- calculer une position plane de barycentre (**X**$_G$, **Z**$_G$) référencée par rapport au centre de gravité **(G)** de ladite machine **(100)** et située sensiblement au niveau d'un plan de référence **(X-Z)** en fonction desdites données de force (**F**$_{antdx}$, **F**$_{antsx}$, **F**$_{postdx}$, **F**$_{postsx}$).

21. Procédé selon la revendication 20, dans lequel ladite position plane de barycentre (**X**$_G$, **Z**$_G$) est calculée sans tenir compte des détections faisant référence à des positions et configurations prises par ledit équipement d'excavation **(103, 104, 105, 106)** de ladite machine de base **(102).**

22. Procédé selon la revendication 20 ou 21, comprenant en outre l'étape opératoire consistant à calculer une position verticale de barycentre (**Y**$_G$) référencée par rapport au centre de gravité **(G)** de ladite machine **(100)** et indicative de la hauteur par rapport audit plan de référence **(X-Z).**

23. Procédé selon la revendication 22, comprenant en outre l'étape opératoire consistant à détecter, au moyen d'un inclinomètre **(401),** des données d'angle (ω) indicatives d'au moins un angle d'inclinaison entre un axe de référence de ladite machine de base **(102)** sensiblement perpendiculaire audit plan de référence **(X-Z)** et la direction de la force de gravité ; ladite position verticale de barycentre (**Y**$_G$) étant calculée en fonction desdites données de force (**F**$_{antdx}$, **F**$_{antsx}$, **F**$_{postdx}$, **F**$_{postsx}$) et desdites données d'angle (ω).

24. Procédé selon la revendication 23, dans lequel la position verticale de barycentre (**Y**$_G$) est calculée en fonction de :

- la variation de position (Δ**X**) de ladite position plane de barycentre (**X**$_G$, **Z**$_G$), calculée entre deux instants consécutifs, et

- la variation angulaire (Δω) desdites données angulaires (ω) détectée entre lesdits deux instants consécutifs.

25. Procédé selon l'une quelconque des revendications 22 à 24, comprenant en outre l'étape opératoire consistant à détecter, au moyen d'un accéléromètre **(403),** des données d'accélération (a) indicatives de l'accélération subie par ladite machine de base **(102)** ; ladite position verticale de barycentre (**Y**$_G$) étant calculée en fonction desdites données de force (**F**$_{antdx}$, **F**$_{antsx}$, **F**$_{postdxr}$, **F**$_{postsx}$) et desdites données d'accélération **(a).**

26. Procédé selon la revendication 25, dans lequel ladite position verticale de barycentre (**Y**$_G$) est calculée en fonction de :

- la variation de position (Δ**X**) de ladite position plane de barycentre (**X**$_G$, **Z**$_G$), calculée entre deux instants consécutifs, et

- lesdites données d'accélération **(a)** détectées entre lesdits deux instants consécutifs.

27. Procédé selon l'une quelconque des revendications 20 à 26, comprenant en outre les étapes opératoires consistant à :

- détecter, au moyen d'un anémomètre **(601),** des données de vitesse **($v_s$)** indicatives de la vitesse du vent et, au moyen d'une girouette **(602),** des données de direction **(d)** indicatives de la direction du vent ;
- calculer le produit **(A*$Y_w$)** de la surface résistante **(A)** de ladite machine **(100)** et la hauteur du centre d'application de la force du vent **($Y_w$)** en fonction desdites données de force **($F_{antdx}$, $F_{antsx}$, $F_{postdx}$, $F_{postsx}$),** desdites données de vitesse **($v_s$)** et desdites données de direction **(d).**

28. Procédé selon la revendication 27, dans lequel ledit produit **(A*$Y_w$)** est calculé en fonction de :

- la variation de position **($\Delta X$)** de ladite position plane de barycentre **($X_G$, $Z_G$),** calculée entre deux instants consécutifs,
  et
- la variation de pression de vent **($\Delta p$)** calculée sur la base desdites données de vitesse **($v_s$)** et desdites données de direction **(d)** détectées entre lesdits deux instants consécutifs.

29. Procédé selon l'une quelconque des revendications précédentes, comprenant en outre l'étape opérationnelle consistant à fournir une commande de rétroaction de ladite machine de base **(102)** en fonction d'au moins un paramètre sélectionné dans le groupe comprenant : ladite position plane de barycentre **($X_G$, $Z_G$),** ladite position verticale de barycentre **($Y_G$)** et ledit produit **(A*Yw).**

30. Procédé selon l'une quelconque des revendications précédentes, comprenant en outre l'étape opératoire consistant à délivrer en sortie un signal de danger perceptible en fonction d'au moins un paramètre choisi dans le groupe comprenant ladite position plane de barycentre **($X_G$, $Z_G$),** ladite position verticale de barycentre **($Y_G$)** et ledit produit **(A*Yw).**

# Fig. 1

Fig. 2A

101

201

203b

208

208

202

203a

205

204

X Y Z

Fig. 2B

208

203a

206

205

207a

207b

Fig. 2C

EP 4 193 032 B1

# Fig. 3

304

303

302

301

# Fig. 4

# Fig. 5

Fig. 6

Fig. 7

$Me = mg\Delta X = maY_G$

$G'$ $G$

$F = ma$

$Y_G$

$\Delta X$

Fig. 8A

Fig. 8B

# Fig. 9

# Fig. 10

# Fig. 11

$\Delta X$ ———→ | CPU | ——→ $Y_G$

$\Delta\omega$ ———→

# Fig. 12

$M_e$ ———→ | CPU | ——→ $A*Y_w$

$\Delta X$ ———→

$v_s$ ↑ | 601 |

$d$ ↑ | 602 |

# Fig. 13

| 403 | —$a$→ | CPU | ——→ $Y_G$

$\Delta X$ ———→

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5248361 B

- JP 2013108245 A